# EUROPEAN PATENT APPLICATION

(11) **EP 4 852 562 A1**
(43) Date of publication of application: **09.12.2026**
(21) Application number: 24923589.6
(22) Date of filing: 30.12.2024
(51) Int. Cl.: H04W 72/0446

(54) **COMMUNICATION METHOD AND APPARATUS**

(30) Priority: 08.02.2024 CN 202410177385
(71) Applicant: HUAWEI TECHNOLOGIES CO., LTD., Shenzhen, Guangdong 518129 (CN)
(72) Inventor: LI, Chao, Shenzhen, Guangdong 518129 (CN); XUE, Lixia, Shenzhen, Guangdong 518129 (CN); LI, Qiang, Shenzhen, Guangdong 518129 (CN)
(74) Representative: Huawei European IPR
(86) International application number: PCT/CN2024/143842
(87) International publication number: WO 2025/167387

(57) **Abstract**

Embodiments of this application provide a communication method and apparatus, and relate to the field of communication technologies. In the method, a first spreading length may be indicated, and the first spreading length may be associated with a first number of repetitions, so that a signal sending apparatus can further spread, by using the first spreading length, a length of a first signal when repeatedly transmitting the first signal based on the first number of repetitions. In this way, resources occupied by the first signal can be reused by another user (or signal). This reduces overall resource overheads of a communication system and helps increase a capacity of the communication system.

## Description

### CROSS-REFERENCE TO RELATED APPLICATIONS

This application claims priority to Chinese Patent Application No. 202410177385.2, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In some communication systems, for example, a satellite communication system, particularly, a communication system in which a terminal device is directly connected to a satellite, quality of a link on which the terminal device transmits a signal to the satellite is usually poor due to a limitation of a transmit power of the terminal device. To resolve this problem, a repetition-based uplink coverage enhancement technology is introduced in the protocol to compensate for insufficiency of the transmit power of the terminal device. The uplink coverage enhancement technology means that more resources can be allocated during data transmission, so that the terminal device can exclusively occupy these resources to perform repeated uplink transmission a plurality of times. Although the uplink coverage enhancement technology can improve communication performance to some extent, the terminal device occupies more resources. This reduces a capacity of a communication system.

### SUMMARY

Embodiments of this application provide a communication method and apparatus, to increase a capacity of a communication system in a repeated transmission scenario.

According to a first aspect, an embodiment of this application provides a communication method. The method may be performed by a first communication apparatus. The first communication apparatus may be a network device (for example, an access network device (for example, a base station or a satellite), a roadside device, or the like), a software module, a hardware module, or the like (for example, a chip or a chip system) in the network device, a terminal device (for example, a mobile phone or an in-vehicle device), or a software module, a hardware module, or the like (for example, a chip, a chip system, or the like) in the terminal device. This is not specifically limited herein. The method includes: sending first indication information, where the first indication information indicates a first spreading length. The first spreading length is a length for performing spreading processing on a first signal, and the first spreading length is associated with a first number of repetitions. The first number of repetitions is a number of repetitions of the first signal. Alternatively, the first number of repetitions may be understood as a number of times of repeatedly transmitting first data.

That the first spreading length is associated with the first number of repetitions may mean that the first spreading length is determined based on the first number of repetitions or the first spreading length is related to the first number of repetitions. For example, the first indication information indicating the first spreading length is carried in a radio resource control (radio resource control, RRC) message, a system message, a radio resource control parameter (which may alternatively be referred to as an RRC parameter), a random access response (random access response, RAR) message, or downlink control information (downlink control information, DCI). This is not specifically limited herein.

In this embodiment of this application, for example, the first communication apparatus sends the first indication information to a second communication apparatus. The first indication information indicates the first spreading length, so that a manner of indicating the first spreading length is provided. In this way, the first communication apparatus or the second communication apparatus may spread and repeatedly transmit a signal based on the first spreading length and the first number of repetitions. Spreading processing supports a plurality of users in reuse. Therefore, resources, occupied by a single user, of a communication system are relatively reduced, and an overall capacity of the communication system is increased. In addition, the first spreading length is related to the first number of repetitions. In this way, the first communication apparatus may indicate the first number of repetitions by using the first spreading length, or may indicate the first spreading length by using the first number of repetitions, so that it may be unnecessary to separately indicate the first spreading length and the first number of repetitions. This reduces signaling overheads.

In a possible implementation of the first aspect, the method further includes: receiving a second signal, where the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and processing the second signal based on the first number of repetitions and the first spreading length, to obtain the first signal. In this implementation, the first communication apparatus is equivalent to a receive end of the signal.

In the foregoing implementation, the second information is the result obtained after spreading processing and repeated transmission are performed on the first signal. This is equivalent to enhancement of the first signal. Therefore, reliability of receiving the first signal by the first communication apparatus can be improved.

In a possible implementation of the first aspect, the method further includes: performing N_{SF}-fold spreading processing on the first signal to obtain a spread first signal, where N_{SF} represents a value of the first spreading length; repeating the spread first signal Nᵣₑₚ times to obtain a second signal, where Nᵣₑₚ represents a value of the first number of repetitions; and sending the second signal. In this implementation, the first communication apparatus is equivalent to a transmit end of the signal.

For example, the performing N_{SF}-fold spreading processing on the first signal includes: performing N_{SF}-fold spreading on the first signal in time domain, performing N_{SF}-fold spreading on the first signal in frequency domain, or performing N_{SF}-fold spreading on the first signal in time domain and frequency domain.

In the foregoing implementation, the first communication apparatus may process the first signal by using the first spreading length and the first number of repetitions, so that reliability of transmitting the first signal is ensured.

In a possible implementation of the first aspect, the performing N_{SF}-fold spreading processing on the first signal to obtain the spread first signal includes: performing, by using the first spreading length, spreading processing on the first signal in K1 first-type time-domain units corresponding to a first frequency, to obtain a signal at the first frequency, where K1 is a positive integer; and/or performing, by using the first spreading length, spreading processing on the first signal in K2 first-type time-domain units corresponding to a second frequency, to obtain a signal at the second frequency, where K2 is a positive integer. The spread first signal includes the signal at the first frequency and/or the signal at the second frequency.

For example, the first frequency and the second frequency are different frequencies in a case of frequency hopping transmission of the first signal, and the first spreading length may be a spreading length corresponding to the first frequency and/or the second frequency. This is not limited herein.

In the foregoing implementation, in the case of frequency hopping transmission of the first signal, the first spreading length may be used for performing spreading processing on the first signal at one or more frequencies. This provides a spreading processing manner in frequency hopping transmission. In addition, when the first spreading length is used for processing the first signal at a plurality of frequencies, it may be unnecessary to configure a spreading length for each frequency. This helps reduce signaling overheads.

In a possible implementation of the first aspect, the first spreading length is in units of a first-type time-domain subunit and/or a first-type frequency-domain subunit; and/or the first number of repetitions is in units of a second-type time-domain subunit and/or a second-type frequency-domain subunit.

For example, the first spreading length is in units of the first-type time-domain subunit, and the first number of repetitions is in units of the second-type time-domain subunit. Alternatively, the first spreading length is in units of the first-type frequency-domain subunit, and the first number of repetitions is in units of the second-type frequency-domain subunit. Alternatively, the first spreading length is in units of the first-type time-domain subunit and the first-type frequency-domain subunit, and the first number of repetitions is in units of the second-type time-domain subunit and the second-type frequency-domain subunit. The first-type time-domain subunit and the second-type time-domain subunit may be time-domain subunits of a same type or time-domain subunits of different types. This is not specifically limited herein. The first-type time-domain subunit is, for example, a slot, a symbol, or the like, and the first-type frequency-domain subunit is, for example, a subcarrier, a resource block, or the like. The second-type time-domain subunit is, for example, a slot, a symbol, or the like. The first-type frequency-domain subunit and the second-type time-domain subunit may be frequency-domain subunits of a same type or frequency-domain subunits of different types.

In the foregoing implementation, there are a plurality of specific forms of implementing the first-type time-domain subunit, the first-type frequency-domain subunit, and the second-type time-domain subunit. This helps improve flexibility of performing spreading processing and repeated transmission on the first signal.

In a possible implementation of the first aspect, the method further includes: sending second indication information, where the second indication information indicates the first number of repetitions, and the first spreading length is associated with the first number of repetitions and the first indication information. In this way, the first communication apparatus may indicate the first spreading length by using both the first number of repetitions and the first indication information.

For example, the second indication information is carried in an RRC message, a system message, an RRC parameter, an RAR message, DCI, or the like. This is not specifically limited herein. The second indication information and the first indication information may be carried in a same message or different messages. This is not specifically limited herein. For example, the first indication information is carried in the DCI, and the second indication information is carried in the RRC message.

In the foregoing implementation, the first spreading length may vary with the indicated first number of repetitions or the first indication information. This helps improve flexibility of indicating the first spreading length.

In a possible implementation of the first aspect, the determining the first spreading length based on the first number of repetitions includes: determining the first spreading length based on a ratio of the first number of repetitions to a first parameter value, where the first parameter value is determined based on a value of the first indication information.

For example, the first parameter value may alternatively have another name or the like. This is not limited herein. The first parameter value is *a*, *a* = 2*^{k}*, *a* = k/M, or the like. Certainly, there may be a plurality of first parameter values. This is not specifically limited herein. k represents the value of the first indication information, for example, represents a decimal result of a bit corresponding to the first indication information. M represents a quantity of first-type time-domain subunits that are in one first-type time-domain unit and that are used for transmitting the first signal.

In the foregoing implementation, a manner of determining the first spreading length is provided. The first spreading length may also have different values when the first indication information has different values, so that the first spreading length is more flexibly indicated. In addition, bit overheads occupied by the first indication information can also be relatively reduced.

In a possible implementation of the first aspect, each of at least one number of repetitions corresponds to at least one spreading length, and the at least one number of repetitions includes the first number of repetitions. In other words, a number of repetitions and a spreading length may be in a one-to-one correspondence, or may be in a one-to-many correspondence.

For example, each number of repetitions corresponds to at least one spreading length. Alternatively, it may be stated as that each number of repetitions is associated with at least one spreading length. Content in which each of at least one number of repetitions corresponds to at least one spreading length may be represented in a form of a table or an array, or in another form. This is not specifically limited herein.

In the foregoing implementation, the first number of repetitions corresponds to at least one spreading length. In other words, the first spreading length may be any spreading length in the at least one spreading length corresponding to the first number of repetitions. In this way, the value of the first spreading length is more flexible.

In a possible implementation of the first aspect, the first spreading length is indicated, based on the first indication information, in the at least one spreading length corresponding to the first number of repetitions.

In the foregoing implementation, the first indication information indicates the first spreading length in a spreading length within a small range, and the spreading length within the small range is the at least one spreading length corresponding to the first number of repetitions. Therefore, a quantity of bits occupied by the first indication information can be relatively reduced.

In a possible implementation of the first aspect, the first indication information includes an index of the first spreading length, and the index of the first spreading length is used for determining the first spreading length from the at least one spreading length corresponding to the first number of repetitions.

In the foregoing implementation, a manner in which the first indication information indicates the first spreading length is simple and direct, and the quantity of bits occupied by the first indication information is relatively reduced.

In a possible implementation of the first aspect, the first spreading length is one of the following: ${N}_{SF} = ceil \left(\frac{{N}_{rep}}{{2}^{k}}\right) , {N}_{SF} = floor \left(\frac{{N}_{rep}}{{2}^{k}}\right)$, or ${N}_{SF} = \frac{{N}_{rep} ∗ M}{k}$, where *N_{SF}* represents the first spreading length, *ceil* represents rounding up, *Nᵣₑₚ* represents the first number of repetitions, *floor* represents rounding down, *k* represents the value of the first indication information, and *M* represents a quantity of first-type time-domain subunits that are in one first-type time-domain unit and that are used for transmitting the first signal.

In the foregoing implementation, a plurality of calculation manners for determining the first spreading length are provided. This enriches manners for determining the first spreading length.

In a possible implementation of the first aspect, the method further includes: sending third indication information, where the third indication information indicates an index of a first spreading sequence corresponding to the first spreading length.

The first spreading length may be understood as a length of the first spreading sequence. For example, the third indication information is carried in an RRC message, a system message, an RRC parameter, an RAR message, DCI, or the like. This is not specifically limited herein. The third indication information and the first indication information may be carried in a same message or different messages. This is not specifically limited herein. For example, both the third indication information and the first indication information are carried in the DCI. The third indication information and the second indication information may be carried in a same message or different messages. This is not specifically limited herein.

In the foregoing implementation, in addition to the first spreading length, information about the first spreading sequence may be further indicated. This facilitates subsequent spreading processing on the first signal.

In a possible implementation of the first aspect, N bits in the third indication information indicate the index of the first spreading sequence, and a value of N is determined based on the first spreading length, where N is a positive integer.

In the foregoing implementation, N may also have different values when the first spreading length has different values. It is equivalent to that the third indication information dynamically indicates the index of the first spreading sequence. This improves flexibility of indicating the index of the first spreading sequence. In addition, bit overheads of the third indication information can be relatively reduced.

In a possible implementation of the first aspect, the value of N is one of the following: *N* = *ceil*(*log*₂(*N_{SF}*)), *N* = *floor*(*log*₂(*N_{SF}*)), or *N* = log₂(*N_{SF}*), where *N_{SF}* represents the first spreading length, *ceil* represents rounding up, and *floor* represents rounding down.

In the foregoing implementation, a plurality of calculation manners for determining the value of N are provided. This enriches manners for determining the value of N.

In a possible implementation of the first aspect, the third indication information includes: a number of the first spreading sequence, where the number of the first spreading sequence is used for determining the index of the first spreading sequence from an index set, and the index set includes an index of a part or all of spreading sequences corresponding to the first spreading length; or a sequence index value and/or a second parameter value, where the sequence index value and the second parameter value are used for determining the index of the first spreading sequence.

The sequence index value may be a value of an index of one or more spreading sequences. The second parameter value may alternatively have another name or the like. This is not limited herein.

In the foregoing implementation, the third indication information indicates the number of the first spreading sequence within the index set, or the third indication information may indicate the sequence index value. The sequence index value and the second parameter value may be used for determining indexes of more spreading sequences. In this way, when the index of the first spreading sequence is flexibly indicated, a quantity of bits occupied by the third indication information can be relatively reduced.

In a possible implementation of the first aspect, the index of the first spreading sequence is a sum of the sequence index value and the second parameter value, a result of exactly dividing a sum of the sequence index value and the second parameter value by the first spreading length, or a result of a product of the sequence index value and the first spreading length modulo the second parameter value.

In the foregoing implementation, a plurality of manners for determining the index of the first spreading sequence are provided. This enriches manners for determining the index of the first spreading sequence. In addition, the index of the first spreading sequence may be determined by using the sequence index value and the second parameter value, and it is unnecessary to directly indicate the index of the first spreading sequence. In this way, resource overheads of the index of the first spreading sequence are relatively reduced.

In a possible implementation of the first aspect, the first spreading length is related to a first quantity, and the first quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal.

In the foregoing implementation, a case in which the first spreading length exceeds the first quantity can be avoided.

In a possible implementation of the first aspect, the first spreading length corresponds to a second spreading length, the first spreading length is used for performing spreading processing on a first part, carried in time domain, of the first signal, and the second spreading length is used for performing spreading processing on a second part, carried in time domain, of the first signal. Optionally, the first part of the first signal may be carried in a first part of the first-type time-domain subunit. In addition, the second part of the first signal may be carried in a second part of the second-type time-domain subunit.

In the foregoing implementation, the first signal may be processed by using both the first spreading length and the second spreading length. This improves flexibility of performing spreading processing on the first signal. In addition, the second spreading length is related to the first spreading length. Therefore, it may be unnecessary to separately indicate the second spreading length. This helps reduce signaling overheads.

In a possible implementation of the first aspect, the second spreading length is a difference between a second quantity and the first spreading length, or a smaller value between the first spreading length and a second quantity. The second quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal, or is a quantity of first-type time-domain subunits that are at the first frequency or the second frequency and that are used for transmitting the first signal. Both the first frequency and the second frequency are used for transmitting the first signal.

In the foregoing implementation, the second spreading length is determined based on the second quantity and the first spreading length, and it is unnecessary to separately indicate the second spreading length. This reduces signaling overheads. In addition, a case in which the second spreading length is excessively large can also be avoided.

In a possible implementation of the first aspect, the value of the first spreading length is a prime number. When the value of the first spreading length is a composite number, the second spreading length may alternatively be determined. This is not limited herein.

In a possible implementation of the first aspect, the first number of repetitions is carried in the second indication information. The second indication information further carries at least one of the following: a first spreading type, where the first spreading type indicates to perform spreading processing on the first signal in frequency domain and/or time domain in a single slot, or the first spreading type indicates to perform spreading processing on the first signal in frequency domain and/or time domain in a plurality of slots; a first transmission mode, where the first transmission mode indicates to transmit the first signal across first-type time-domain units, or transmit the first signal in a single first-type time-domain unit; a third quantity, where the third quantity is a quantity of first-type time-domain subunits corresponding to each element in the first spreading sequence; a fourth quantity, where the fourth quantity is a quantity of first-type frequency-domain subunits corresponding to each element in the first spreading sequence; the index of the first spreading sequence corresponding to the first spreading length; a comb size, where the comb size indicates a spacing for mapping the first signal in a frequency-domain direction; or a comb offset value, where the comb offset value indicates an offset of a spacing for mapping the first signal in a frequency-domain direction.

In the foregoing implementation, the second indication information may be reused to indicate a configuration related to transmission of the first signal. This reduces a quantity of signaling interactions.

According to a second aspect, an embodiment of this application provides a communication method. The method may be performed by a second communication apparatus. The second communication apparatus may be a network device (for example, an access network device (for example, a base station or a satellite), a roadside device, or the like), a software module, a hardware module, or the like (for example, a chip or a chip system) in the network device, a terminal device (for example, a mobile phone or an in-vehicle device), or a software module, a hardware module, or the like (for example, a chip, a chip system, or the like) in the terminal device. This is not specifically limited herein. For example, both the second communication apparatus and a first communication apparatus are terminal devices. Alternatively, the second communication apparatus is a terminal device, and the first communication apparatus is a network device. The method includes: receiving first indication information, where the first indication information indicates a first spreading length, the first spreading length is associated with a first number of repetitions, the first number of repetitions is a first number of repetitions of a first signal, and the first spreading length is a length for performing spreading processing on the first signal; and determining the first spreading length.

In a possible implementation of the second aspect, the method further includes: receiving a second signal, where the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and processing the second signal based on the first number of repetitions and the first spreading length, to obtain the first signal.

In a possible implementation of the second aspect, the method further includes: performing N_{SF}-fold spreading processing on the first signal to obtain a spread first signal, where N_{SF} represents a value of the first spreading length; repeating the spread first signal Nᵣₑₚ times to obtain a second signal, where Nᵣₑₚ represents a value of the first number of repetitions; and sending the second signal.

In a possible implementation of the second aspect, the performing N_{SF}-fold spreading processing on the first signal to obtain the spread first signal includes: performing, by using the first spreading length, spreading processing on the first signal in K1 first-type time-domain units corresponding to a first frequency, to obtain a signal at the first frequency, where K1 is a positive integer; and/or performing, by using the first spreading length, spreading processing on the first signal in K2 first-type time-domain units corresponding to a second frequency, to obtain a signal at the second frequency, where K2 is a positive integer. The spread first signal includes the signal at the first frequency and/or the signal at the second frequency.

In a possible implementation of the second aspect, the first spreading length is in units of a first-type time-domain subunit and/or a first-type frequency-domain subunit; and/or the first number of repetitions is in units of a second-type time-domain subunit and/or a second-type frequency-domain subunit.

In a possible implementation of the second aspect, the method further includes: receiving second indication information, where the second indication information indicates the first number of repetitions, and the first spreading length is associated with both the first number of repetitions and the first indication information.

In a possible implementation of the second aspect, the determining the first spreading length includes: determining the first spreading length based on a ratio of the first number of repetitions to a first parameter value, where the first parameter value is determined based on a value of the first indication information.

In a possible implementation of the second aspect, *a* = 2*^{k}*, where *a* represents the first parameter value, and k represents the value of the first indication information; or *a* = k/M, where *a* represents the first parameter value, k represents the value of the first indication information, and M represents a quantity of first-type time-domain subunits that are in one first-type time-domain unit and that are used for transmitting the first signal.

In a possible implementation of the second aspect, each of at least one number of repetitions corresponds to at least one spreading length, and the at least one number of repetitions includes the first number of repetitions.

In a possible implementation of the second aspect, the determining the first spreading length includes: determining, based on the first indication information, the first spreading length from at least one spreading length corresponding to the first number of repetitions.

In a possible implementation of the second aspect, the first indication information includes an index of the first spreading length, and the index of the first spreading length is used for determining the first spreading length from the at least one spreading length corresponding to the first number of repetitions.

In a possible implementation of the second aspect, the first spreading length is one of the following: ${N}_{SF} = ceil \left(\frac{{N}_{rep}}{{2}^{k}}\right) , {N}_{SF} = floor \left(\frac{{N}_{rep}}{{2}^{k}}\right)$, or ${N}_{SF} = \frac{{N}_{rep} ∗ M}{k}$, where *N_{SF}* represents the first spreading length, *ceil* represents rounding up, *Nᵣₑₚ* represents the first number of repetitions, *floor* represents rounding down, *k* represents the value of the first indication information, and M represents a quantity of first-type time-domain subunits that are in one first-type time-domain unit and that are used for transmitting the first signal.

In a possible implementation of the second aspect, the method further includes: receiving third indication information, where the third indication information indicates an index of a first spreading sequence corresponding to the first spreading length.

In a possible implementation of the second aspect, N bits in the third indication information indicate the index of the first spreading sequence, and a value of N is determined based on the first spreading length, where N is a positive integer.

In a possible implementation of the second aspect, the value of N is one of the following: *N* = *ceil*(*log*₂(*N_{SF}*)), *N* = *floor*(*log*₂(*N_{SF}*)), or *N* = log₂(*N_{SF}*), where *N_{SF}* represents the first spreading length, *ceil* represents rounding up, and *floor* represents rounding down.

In a possible implementation of the second aspect, the third indication information includes: a number of the first spreading sequence, where the number of the first spreading sequence is used for determining the index of the first spreading sequence from an index set, and the index set includes an index of a part or all of spreading sequences corresponding to the first spreading length; or a sequence index and/or a second parameter value, where the sequence index and the second parameter value are used for determining the index of the first spreading sequence.

In a possible implementation of the second aspect, the index of the first spreading sequence is a sum of the sequence index and the second parameter value, a result of exactly dividing a sum of the sequence index and the second parameter value by the first spreading length, or a result of a product of the sequence index and the first spreading length modulo the second parameter value.

In a possible implementation of the second aspect, the first spreading length is related to a first quantity, and the first quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal.

In a possible implementation of the second aspect, the method further includes: determining a second spreading length based on the first spreading length, where the first spreading length is used for performing spreading processing on a first part, carried in time domain, of the first signal, and the second spreading length is used for performing spreading processing on a second part, carried in time domain, of the first signal.

In a possible implementation of the second aspect, the second spreading length is a difference between a second quantity and the first spreading length, or a smaller value between the first spreading length and a second quantity. The second quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal, or is a quantity of first-type time-domain subunits that are at the first frequency or the second frequency and that are used for transmitting the first signal. Both the first frequency and the second frequency are used for transmitting the first signal.

In a possible implementation of the second aspect, the value of the first spreading length is a prime number.

In a possible implementation of the second aspect, the first number of repetitions is carried in the second indication information. The second indication information further carries at least one of the following: a first spreading type, where the first spreading type indicates to perform spreading processing on the first signal in frequency domain and/or time domain; a first transmission mode, where the first transmission mode indicates to transmit the first signal across first-type time-domain units, or transmit the first signal in a single first-type time-domain unit; a third quantity, where the third quantity is a quantity of first-type time-domain subunits corresponding to each element in the first spreading sequence; a fourth quantity, where the fourth quantity is a quantity of first-type frequency-domain subunits corresponding to each element in the first spreading sequence; the index of the first spreading sequence corresponding to the first spreading length; a comb size, where the comb size indicates a spacing for mapping the first signal in a frequency-domain direction; or a comb offset value, where the comb offset value indicates an offset of a spacing for mapping the first signal in a frequency-domain direction.

In a possible implementation of the second aspect, the first indication information is carried in a radio resource control message, a system message, a radio resource control parameter, a random access response message, or downlink control information, and the radio resource control parameter indicates a common radio resource control parameter of a plurality of communication apparatuses.

According to a third aspect, an embodiment of this application provides a communication method. The method may be performed by a first communication apparatus. The first communication apparatus may be a network device (for example, an access network device (for example, a base station or a satellite), a roadside device, or the like), a software module, a hardware module, or the like (for example, a chip or a chip system) in the network device, a terminal device (for example, a mobile phone or an in-vehicle device), or a software module, a hardware module, or the like (for example, a chip, a chip system, or the like) in the terminal device. This is not specifically limited herein. The method includes: determining a first number of repetitions, where the first number of repetitions is associated with a first spreading length, the first number of repetitions is a number of times of repeatedly transmitting a first signal, and the first spreading length is a length for performing spreading processing on the first signal; and sending first indication information, where the first indication information indicates the first number of repetitions, and the first number of repetitions is used for determining a first spreading factor.

In this embodiment of this application, for example, the first communication apparatus sends the first indication information to a second communication apparatus. The first indication information indicates the first number of repetitions, so that a manner of indicating the first number of repetitions is provided. In this way, the first communication apparatus or the second communication apparatus may spread and repeatedly transmit a signal based on the first spreading length and the first number of repetitions. Spreading processing supports a plurality of users in reuse. Therefore, resources, occupied by a single user, of a communication system are relatively reduced, and an overall capacity of the communication system is increased. In addition, the first spreading length is related to the first number of repetitions. In this way, the first communication apparatus may indicate the first spreading length by using the first number of repetitions, so that it may be unnecessary to separately indicate the first spreading length and the first number of repetitions. This reduces signaling overheads.

In a possible implementation of the third aspect, the method further includes: receiving a second signal, where the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and processing the second signal based on the first number of repetitions and the first spreading length, to obtain the first signal. In this implementation, the first communication apparatus is equivalent to a receive end of the signal.

In a possible implementation of the third aspect, the method further includes: performing N_{SF}-fold spreading processing on the first signal to obtain a spread first signal, where N_{SF} represents a value of the first spreading length; repeating the spread first signal Nᵣₑₚ times to obtain a second signal, where Nᵣₑₚ represents a value of the first number of repetitions; and sending the second signal. In this implementation, the first communication apparatus is equivalent to a transmit end of the signal.

In a possible implementation of the third aspect, the performing N_{SF}-fold spreading processing on the first signal to obtain the spread first signal includes: performing, by using the first spreading length, spreading processing on the first signal in K1 first-type time-domain units corresponding to a first frequency, to obtain a signal at the first frequency, where K1 is a positive integer; and/or performing, by using the first spreading length, spreading processing on the first signal in K2 first-type time-domain units corresponding to a second frequency, to obtain a signal at the second frequency, where K2 is a positive integer. The spread first signal includes the signal at the first frequency and/or the signal at the second frequency.

In a possible implementation of the third aspect, the first spreading length is in units of a first-type time-domain subunit and/or a first-type frequency-domain subunit; and/or the first number of repetitions is in units of a second-type time-domain subunit and/or a second-type frequency-domain subunit.

In a possible implementation of the third aspect, the method further includes: sending second indication information, where the first spreading length is associated with the first number of repetitions and the second indication information. In this way, the first communication apparatus may indicate the first spreading length by using both the first number of repetitions and the second indication information.

In a possible implementation of the third aspect, the first spreading length is determined based on a ratio of the first number of repetitions to a first parameter value, and the first parameter value is determined based on a value of the second indication information.

In a possible implementation of the third aspect, each of at least one number of repetitions corresponds to at least one spreading length, and the at least one number of repetitions includes the first number of repetitions. In other words, a number of repetitions and a spreading length may be in a one-to-one correspondence, or may be in a one-to-many correspondence.

In a possible implementation of the third aspect, the first spreading length is indicated, based on the second indication information, in at least one spreading length corresponding to the first number of repetitions.

In a possible implementation of the third aspect, the second indication information includes an index of the first spreading length, and the index of the first spreading length is used for determining the first spreading length from the at least one spreading length corresponding to the first number of repetitions.

In a possible implementation of the third aspect, the first spreading length is one of the following: ${N}_{SF} = ceil \left(\frac{{N}_{rep}}{{2}^{k}}\right) , {N}_{SF} = floor \left(\frac{{N}_{rep}}{{2}^{k}}\right)$, or ${N}_{SF} = \frac{{N}_{rep} ∗ M}{k}$, where *N_{SF}* represents the first spreading length, *ceil* represents rounding up, *Nᵣₑₚ* represents the first number of repetitions, *floor* represents rounding down, *k* represents the value of the second indication information, and *M* represents a quantity of first-type time-domain subunits that are in one first-type time-domain unit and that are used for transmitting the first signal.

In a possible implementation of the third aspect, the method further includes: sending third indication information, where the third indication information indicates an index of a first spreading sequence corresponding to the first spreading length.

In a possible implementation of the third aspect, N bits in the third indication information indicate the index of the first spreading sequence, and a value of N is determined based on the first spreading length, where N is a positive integer.

In a possible implementation of the third aspect, the value of N is one of the following: *N* = *ceil*(*log*₂(*N_{SF}*)), *N* = *floor*(*log*₂(*N_{SF}*)), or *N* = log₂(*N_{SF}*), where *N_{SF}* represents the first spreading length, *ceil* represents rounding up, and *floor* represents rounding down.

In a possible implementation of the third aspect, the third indication information includes: a number of the first spreading sequence, where the number of the first spreading sequence is used for determining the index of the first spreading sequence from an index set, and the index set includes an index of a part or all of spreading sequences corresponding to the first spreading length; or a sequence index value and/or a second parameter value, where the sequence index value and the second parameter value are used for determining the index of the first spreading sequence.

In a possible implementation of the third aspect, the index of the first spreading sequence is a sum of the sequence index value and the second parameter value, a result of exactly dividing a sum of the sequence index value and the second parameter value by the first spreading length, or a result of a product of the sequence index value and the first spreading length modulo the second parameter value.

In a possible implementation of the third aspect, the first spreading length is related to a first quantity, and the first quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal.

In a possible implementation of the third aspect, the first spreading length corresponds to a second spreading length, the first spreading length is used for performing spreading processing on a first part, carried in time domain, of the first signal, and the second spreading length is used for performing spreading processing on a second part, carried in time domain, of the first signal.

In a possible implementation of the third aspect, the second spreading length is a difference between a second quantity and the first spreading length, or a smaller value between the first spreading length and a second quantity. The second quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal, or is a quantity of first-type time-domain subunits that are at the first frequency or the second frequency and that are used for transmitting the first signal. Both the first frequency and the second frequency are used for transmitting the first signal.

In a possible implementation of the third aspect, the value of the first spreading length is a prime number. When the value of the first spreading length is a composite number, the second spreading length may alternatively be determined. This is not limited herein.

In a possible implementation of the third aspect, the first indication information further carries at least one of the following: a first spreading type, where the first spreading type indicates to perform spreading processing on the first signal in frequency domain and/or time domain in a single slot, or the first spreading type indicates to perform spreading processing on the first signal in frequency domain and/or time domain in a plurality of slots; a first transmission mode, where the first transmission mode indicates to transmit the first signal across first-type time-domain units, or transmit the first signal in a single first-type time-domain unit; a third quantity, where the third quantity is a quantity of first-type time-domain subunits corresponding to each element in the first spreading sequence; a fourth quantity, where the fourth quantity is a quantity of first-type frequency-domain subunits corresponding to each element in the first spreading sequence; the index of the first spreading sequence corresponding to the first spreading length; a comb size, where the comb size indicates a spacing for mapping the first signal in a frequency-domain direction; or a comb offset value, where the comb offset value indicates an offset of a spacing for mapping the first signal in a frequency-domain direction.

According to a fourth aspect, an embodiment of this application provides a communication method. The method may be performed by a second communication apparatus. The second communication apparatus may be a network device (for example, an access network device (for example, a base station or a satellite), a roadside device, or the like), a software module, a hardware module, or the like (for example, a chip or a chip system) in the network device, a terminal device (for example, a mobile phone or an in-vehicle device), or a software module, a hardware module, or the like (for example, a chip, a chip system, or the like) in the terminal device. This is not specifically limited herein. The method includes: receiving first indication information, where the first indication information indicates a first number of repetitions, and the first number of repetitions is a number of times of repeatedly transmitting a first signal; and determining a first spreading length based on the first number of repetitions, where the first spreading length is a length for performing spreading processing on the first signal.

In a possible implementation of the fourth aspect, the method further includes: receiving a second signal, where the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and processing the second signal based on the first number of repetitions and the first spreading length, to obtain the first signal. In this implementation, the first communication apparatus is equivalent to a receive end of the signal.

In a possible implementation of the fourth aspect, the method further includes: performing N_{SF}-fold spreading processing on the first signal to obtain a spread first signal, where N_{SF} represents a value of the first spreading length; repeating the spread first signal Nᵣₑₚ times to obtain a second signal, where Nᵣₑₚ represents a value of the first number of repetitions; and sending the second signal. In this implementation, the first communication apparatus is equivalent to a transmit end of the signal.

For example, the performing N_{SF}-fold spreading processing on the first signal includes: performing N_{SF}-fold spreading on the first signal in time domain, performing N_{SF}-fold spreading on the first signal in frequency domain, or performing N_{SF}-fold spreading on the first signal in time domain and frequency domain.

In a possible implementation of the fourth aspect, the performing N_{SF}-fold spreading processing on the first signal to obtain the spread first signal includes: performing, by using the first spreading length, spreading processing on the first signal in K1 first-type time-domain units corresponding to a first frequency, to obtain a signal at the first frequency, where K1 is a positive integer; and/or performing, by using the first spreading length, spreading processing on the first signal in K2 first-type time-domain units corresponding to a second frequency, to obtain a signal at the second frequency, where K2 is a positive integer. The spread first signal includes the signal at the first frequency and/or the signal at the second frequency.

In a possible implementation of the fourth aspect, the first spreading length is in units of a first-type time-domain subunit and/or a first-type frequency-domain subunit; and/or the first number of repetitions is in units of a second-type time-domain subunit and/or a second-type frequency-domain subunit.

In a possible implementation of the fourth aspect, the method further includes: sending second indication information, where the first spreading length is associated with the first number of repetitions and the second indication information. In this way, the first communication apparatus may indicate the first spreading length by using both the first number of repetitions and the second indication information.

In a possible implementation of the fourth aspect, the first spreading length is determined based on a ratio of the first number of repetitions to a first parameter value, and the first parameter value is determined based on a value of the second indication information.

In a possible implementation of the fourth aspect, each of at least one number of repetitions corresponds to at least one spreading length, and the at least one number of repetitions includes the first number of repetitions. In other words, a number of repetitions and a spreading length may be in a one-to-one correspondence, or may be in a one-to-many correspondence.

In a possible implementation of the fourth aspect, the first spreading length is indicated, based on the second indication information, in at least one spreading length corresponding to the first number of repetitions.

In a possible implementation of the fourth aspect, the second indication information includes an index of the first spreading length, and the index of the first spreading length is used for determining the first spreading length from the at least one spreading length corresponding to the first number of repetitions.

In a possible implementation of the fourth aspect, the first spreading length is one of the following: ${N}_{SF} = ceil \left(\frac{{N}_{rep}}{{2}^{k}}\right) , {N}_{SF} = floor \left(\frac{{N}_{rep}}{{2}^{k}}\right)$, or ${N}_{SF} = \frac{{N}_{rep} ∗ M}{k}$, where *N_{SF}* represents the first spreading length, *ceil* represents rounding up, *Nᵣₑₚ* represents the first number of repetitions, *floor* represents rounding down, *k* represents the value of the second indication information, and *M* represents a quantity of first-type time-domain subunits that are in one first-type time-domain unit and that are used for transmitting the first signal.

In a possible implementation of the fourth aspect, the method further includes: receiving third indication information, where the third indication information indicates an index of a first spreading sequence corresponding to the first spreading length.

In a possible implementation of the fourth aspect, N bits in the third indication information indicate the index of the first spreading sequence, and a value of N is determined based on the first spreading length, where N is a positive integer.

In a possible implementation of the fourth aspect, the value of N is one of the following: *N* = *ceil*(*log*₂(*N_{SF}*)), *N* = *floor*(*log*₂(*N_{SF}*)), or *N* = log₂(*N_{SF}*), where *N_{SF}* represents the first spreading length, *ceil* represents rounding up, and *floor* represents rounding down.

In a possible implementation of the fourth aspect, the third indication information includes: a number of the first spreading sequence, where the number of the first spreading sequence is used for determining the index of the first spreading sequence from an index set, and the index set includes an index of a part or all of spreading sequences corresponding to the first spreading length; or a sequence index value and/or a second parameter value, where the sequence index value and the second parameter value are used for determining the index of the first spreading sequence.

In a possible implementation of the fourth aspect, the index of the first spreading sequence is a sum of the sequence index value and the second parameter value, a result of exactly dividing a sum of the sequence index value and the second parameter value by the first spreading length, or a result of a product of the sequence index value and the first spreading length modulo the second parameter value.

In a possible implementation of the fourth aspect, the first spreading length is related to a first quantity, and the first quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal.

In a possible implementation of the fourth aspect, the first spreading length corresponds to a second spreading length, the first spreading length is used for performing spreading processing on a first part, carried in time domain, of the first signal, and the second spreading length is used for performing spreading processing on a second part, carried in time domain, of the first signal.

In a possible implementation of the fourth aspect, the second spreading length is a difference between a second quantity and the first spreading length, or a smaller value between the first spreading length and a second quantity. The second quantity is a quantity of first-type time-domain subunits that are in one first-type time-domain unit and that are used for transmitting the first signal other than a first-type time-domain subunit that is in the one first-type time-domain unit and that is used for transmitting a demodulation reference signal, or is a quantity of first-type time-domain subunits that are at the first frequency or the second frequency and that are used for transmitting the first signal. Both the first frequency and the second frequency are used for transmitting the first signal.

In a possible implementation of the fourth aspect, the value of the first spreading length is a prime number. When the value of the first spreading length is a composite number, the second spreading length may alternatively be determined. This is not limited herein.

In a possible implementation of the fourth aspect, the first indication information further carries at least one of the following: a first spreading type, where the first spreading type indicates to perform spreading processing on the first signal in frequency domain and/or time domain in a single slot, or the first spreading type indicates to perform spreading processing on the first signal in frequency domain and/or time domain in a plurality of slots; a first transmission mode, where the first transmission mode indicates to transmit the first signal across first-type time-domain units, or transmit the first signal in a single first-type time-domain unit; a third quantity, where the third quantity is a quantity of first-type time-domain subunits corresponding to each element in the first spreading sequence; a fourth quantity, where the fourth quantity is a quantity of first-type frequency-domain subunits corresponding to each element in the first spreading sequence; the index of the first spreading sequence corresponding to the first spreading length; a comb size, where the comb size indicates a spacing for mapping the first signal in a frequency-domain direction; or a comb offset value, where the comb offset value indicates an offset of a spacing for mapping the first signal in a frequency-domain direction.

According to a fifth aspect, an embodiment of this application provides a communication apparatus. The communication apparatus may be the first communication apparatus in the first aspect, or may be a software or hardware module arranged in the first communication apparatus. The communication apparatus includes a corresponding means (means) or module configured to perform the first aspect or any optional implementation. For example, the communication apparatus includes a processing module (sometimes also referred to as a processing unit) and a transceiver module (sometimes also referred to as a transceiver unit). The transceiver module (unit) may be referred to as a communication module (or a communication unit). Optionally, the transceiver module includes a receive unit and a transmit unit. In a design, the communication apparatus is a communication chip, the processing unit may be one or more processors or processor cores, and the communication unit may be an input/output circuit, an input/output interface, or an antenna port of the communication chip. In another design, the transceiver module may be a transmitter and a receiver, or may be a transmitter machine and a receiver machine.

For example, the transceiver module is configured to send first indication information under control of the processing module, where the first indication information indicates a first spreading length. The first spreading length is a length for performing spreading processing on a first signal, and the first spreading length is associated with a first number of repetitions.

The communication apparatus in the fifth aspect may further implement any one of the possible implementations of the first aspect. Details are not listed herein one by one.

According to a sixth aspect, an embodiment of this application provides a communication apparatus. The communication apparatus may be the second communication apparatus in the second aspect, or may be a software or hardware module arranged in the second communication apparatus. The communication apparatus includes a corresponding means (means) or module configured to perform the second aspect or any optional implementation. For example, the communication apparatus includes a processing module (sometimes also referred to as a processing unit) and a transceiver module (sometimes also referred to as a transceiver unit). The transceiver module (unit) may be referred to as a communication module (or a communication unit). Optionally, the transceiver module includes a receive unit and a transmit unit. In a design, the communication apparatus is a communication chip, the processing unit may be one or more processors or processor cores, and the communication unit may be an input/output circuit, an input/output interface, or an antenna port of the communication chip. In another design, the transceiver module may be a transmitter and a receiver, or may be a transmitter machine and a receiver machine.

For example, the transceiver module is configured to receive first indication information, where the first indication information indicates a first spreading length, and the first spreading length is associated with a first number of repetitions; and the processing module is configured to determine the first spreading length.

The communication apparatus in the sixth aspect may further implement any one of the possible implementations of the second aspect. Details are not listed herein one by one.

According to a seventh aspect, an embodiment of this application provides a communication apparatus. The communication apparatus may be the first communication apparatus in the third aspect, or may be a software or hardware module arranged in the first communication apparatus. The communication apparatus includes a corresponding means (means) or module configured to perform the third aspect or any optional implementation. For example, the communication apparatus includes a processing module (sometimes also referred to as a processing unit) and a transceiver module (sometimes also referred to as a transceiver unit). The transceiver module (unit) may be referred to as a communication module (or a communication unit). Optionally, the transceiver module includes a receive unit and a transmit unit. In a design, the communication apparatus is a communication chip, the processing unit may be one or more processors or processor cores, and the communication unit may be an input/output circuit, an input/output interface, or an antenna port of the communication chip. In another design, the transceiver module may be a transmitter and a receiver, or may be a transmitter machine and a receiver machine.

For example, the processing module is configured to determine a first number of repetitions, where the first number of repetitions is associated with a first spreading length; and the transceiver module is configured to send first indication information, where the first indication information indicates the first number of repetitions, and the first number of repetitions is used for determining a first spreading factor.

The communication apparatus in the seventh aspect may further implement any one of the possible implementations of the third aspect. Details are not listed herein one by one.

According to an eighth aspect, an embodiment of this application provides a communication apparatus. The communication apparatus may be the second communication apparatus in the fourth aspect, or may be a software or hardware module arranged in the second communication apparatus. The communication apparatus includes a corresponding means (means) or module configured to perform the fourth aspect or any optional implementation. For example, the communication apparatus includes a processing module (sometimes also referred to as a processing unit) and a transceiver module (sometimes also referred to as a transceiver unit). The transceiver module (unit) may be referred to as a communication module (or a communication unit). Optionally, the transceiver module includes a receive unit and a transmit unit. In a design, the communication apparatus is a communication chip, the processing unit may be one or more processors or processor cores, and the communication unit may be an input/output circuit, an input/output interface, or an antenna port of the communication chip. In another design, the transceiver module may be a transmitter and a receiver, or may be a transmitter machine and a receiver machine.

For example, the processing module is configured to determine a first number of repetitions, where the first number of repetitions is associated with a first spreading length; and the transceiver module is configured to send first indication information, where the first indication information indicates the first number of repetitions, and the first number of repetitions is used for determining a first spreading factor.

The communication apparatus in the eighth aspect may further implement any one of the possible implementations of the fourth aspect. Details are not listed herein one by one.

According to a ninth aspect, an embodiment of this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to: by using a logic circuit or by executing code instructions, implement the method according to any one of the first aspect to the fourth aspect, or perform the method according to any one of the possible implementations of the first aspect to the fourth aspect.

In a specific implementation process, the communication apparatus may be a chip, and the processor may be a transistor, a gate circuit, a trigger, any logic circuit, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal device such as a smartphone, or may be a network device such as a radio access network device (for example, a base station).

In another implementation, the communication apparatus may be a part of devices in a wireless communication device, for example, an integrated circuit product such as a system chip, a communication chip, or the like. The system chip may also be referred to as a system on chip (system on chip, SoC), or briefly referred to as a SoC chip. The communication chip may include a baseband processing chip and a radio frequency processing chip. The baseband processing chip is sometimes also referred to as a modem (modem) or a baseband chip. The radio frequency processing chip is sometimes also referred to as a radio frequency transceiver (transceiver) or a radio frequency chip. During physical implementation, a part or all of chips of the communication chip may be integrated into the SoC chip. For example, the baseband processing chip is integrated into the SoC chip, but the radio frequency processing chip is not integrated into the SoC chip. The interface circuit may be the radio frequency processing chip in the wireless communication device, and the processor may be the baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

In still another implementation, the communication apparatus may be a chip system. The chip system may include a chip, or may include a chip and another discrete device. The chip system may include, for example, a field programmable gate array (field programmable gate array, FPGA), an application-specific integrated circuit (application-specific integrated circuit, ASIC), a system on chip (system on chip, SoC), a CPU, a network processor (network processor, NP), a DSP, a microcontroller unit (microcontroller unit, MCU), a programmable controller (programmable logic device, PLD), another integrated chip, or the like.

According to a tenth aspect, an embodiment of this application provides a communication apparatus. The communication apparatus includes a processor. When the communication apparatus runs, the processor performs the method according to any one of the first aspect to the fourth aspect, or performs the method according to any one of the possible implementations of the first aspect to the fourth aspect. Optionally, the communication apparatus further includes a memory. The memory stores one or more computer programs. The processor may execute the one or more computer programs, to implement the method according to any one of the first aspect to the fourth aspect, or perform the method according to any one of the possible implementations of the first aspect to the fourth aspect.

Optionally, the communication apparatus further includes other components, for example, an antenna, an input/output module, an interface (for example, a communication interface), and the like. The components may be hardware, software, or a combination of software and hardware.

According to an eleventh aspect, an embodiment of this application provides a communication system. The communication system includes a first communication apparatus and a second communication apparatus. For example, the first communication apparatus implements the method according to the first aspect or any one of the possible implementations of the first aspect, and the second communication apparatus implements the method according to the second aspect or any one of the possible implementations of the second aspect. Alternatively, the first communication apparatus implements the method according to the third aspect or any one of the possible implementations of the third aspect, and the second communication apparatus implements the method according to the fourth aspect or any one of the possible implementations of the fourth aspect.

According to a twelfth aspect, an embodiment of this application provides a chip system. The chip system includes a processor. Optionally, the chip system may further include an interface (for example, a communication interface). The processor may be configured to: implement the method according to any one of the first aspect to the fourth aspect, or perform the method according to any one of the possible implementations of the first aspect to the fourth aspect. Optionally, the chip system further includes a memory. The memory is configured to store a computer program (which may also be referred to as code or instructions). The processor is configured to invoke the computer program from the memory and run the computer program, so that a device in which the chip system is installed performs the method according to any one of the first aspect to the fourth aspect, or performs the method according to any one of the possible implementations of the first aspect to the fourth aspect. For an implementation of the chip system, refer to the foregoing content of the chip system. Details are not described herein again.

According to a thirteenth aspect, an embodiment of this application provides a computer-readable storage medium. The computer-readable storage medium is configured to store a computer program or instructions. When the computer program or the instructions are run, the method according to any one of the first aspect to the fourth aspect is implemented, or the method according to any one of the possible implementations of the first aspect to the fourth aspect is performed.

According to a fourteenth aspect, an embodiment of this application provides a computer program product. When the computer program product runs on a computer, the method according to any one of the first aspect to the fourth aspect is implemented, or the method according to any one of the possible implementations of the first aspect to the fourth aspect is performed.

In a possible implementation, the computer program product includes a computer program. When the computer program is run on the computer, the computer is caused to perform the method according to any one of the first aspect and the possible implementations of the first aspect or any one of the second aspect and the possible implementations of the second aspect.

In another possible implementation, the computer program product includes instructions. When the instructions are run on the computer, the computer is caused to perform the method according to any one of the first aspect and the possible implementations of the first aspect or any one of the second aspect and the possible implementations of the second aspect.

For beneficial effects of any one of the technical solutions in the second aspect to the thirteenth aspect, refer to the beneficial effects of the corresponding technical solution in the first aspect. Repeated content is not listed herein again.

### BRIEF DESCRIPTION OF DRAWINGS

FIG. 1(1) and FIG. 1(2) are diagrams of repeated transmission;
FIG. 2 to FIG. 10 are diagrams of several types of spreading processing;
FIG. 11 is a diagram of an architecture of a communication system to which an embodiment of this application is applicable;
FIG. 12 is a diagram of a satellite communication system in a transparent mode, to which an embodiment of this application is applicable;
FIG. 13 is a diagram of a satellite communication system in a regenerative mode, to which an embodiment of this application is applicable;
FIG. 14 to FIG. 16 are diagrams of several communication systems to which embodiments of this application are applicable;
FIG. 17 is a diagram of a communication method according to an embodiment of this application;
FIG. 18(1) and FIG. 18(2) are diagrams of a second quantity according to an embodiment of this application;
FIG. 19 is a diagram of indicating an index of a first spreading length according to an embodiment of this application;
FIG. 20 and FIG. 21(1) and FIG. 21(2) are several diagrams of carrying a signal according to embodiments of this application;
FIG. 22 is a diagram of another communication method according to an embodiment of this application;
FIG. 23 is a diagram of still another communication method according to an embodiment of this application; and
FIG. 24 to FIG. 26 are diagrams of several communication apparatuses according to embodiments of this application.

### DESCRIPTION OF EMBODIMENTS

The following further describes in detail embodiments of this application with reference to the accompanying drawings.

The following describes some terms in embodiments of this application, to facilitate understanding of a person skilled in the art.

### 1. Time-domain unit

The time-domain unit may also be referred to as a time unit, and may be a slot (slot), a sub-slot, a symbol (symbol), a subframe (subframe), a half frame, a frame (frame), a mini-subframe, a partial slot (partial slot), a mini-slot (mini-slot), a sensing slot (sensing slot), a transmission occasion (transmission occasion, TO), a unit of a time-domain resource that emerges in a future evolved communication process, or the like. This is not limited herein. One slot includes at least one symbol. For example, one slot includes 14 symbols or 12 symbols. Slots may have different slot types, and different slot types may include different quantities of symbols. For example, a mini-slot includes L symbols, where L is a quantity less than 7, for example, 2, 3, 4, or another value, and a common slot includes six symbols, seven symbols, 12 symbols, 14 symbols, or the like. The symbol may be an abbreviation for a time-domain symbol, and the symbol is, for example, an orthogonal frequency division multiplexing (orthogonal frequency division multiplexing, OFDM) symbol. Certainly, the symbol may alternatively be named in combination with another multiple-access manner. This is not limited herein.

A symbol in one slot may be used for uplink transmission, downlink transmission, and/or the like. This is not limited herein. The time-domain unit may be used as a granularity (or unit) of a time-domain resource. One time-domain unit includes one or more time-domain subunits, to be specific, the time-domain subunit is a division unit or a composition unit of the time-domain unit. For example, the time-domain unit is a slot, and the time-domain subunit may be a sub-slot or a symbol. For different subcarrier spacings, symbol lengths may be different. Therefore, slot lengths may also be different. For example, a length of one slot corresponding to a subcarrier spacing of 15 kHz is 0.5 ms, and a length of one slot corresponding to a subcarrier spacing of 60 kHz is 0.125 ms.

A first-type time-domain unit and a second-type time-domain unit in embodiments of this application may be time-domain units of a same type, or may be time-domain units of different types. For example, the first-type time-domain unit is a slot, and the second-type time-domain unit is a symbol. Alternatively, both the first-type time-domain unit and the second-type time-domain unit are slots. The first-type time-domain unit includes one or more first-type time-domain subunits. Similarly, the second-type time-domain unit includes one or more second-type time-domain subunits. For example, both the first-type time-domain unit and the second-type time-domain unit are slots, and both the first-type time-domain subunit and the second-type time-domain subunit are symbols.

### 2. Frequency-domain unit

The frequency-domain unit may be referred to as a frequency unit. The frequency-domain unit may be a resource block (resource block, RB), a resource block group (resource block group, RBG), a subcarrier (subcarrier), a subchannel, a sub-resource pool, a predefined subband (subband), a precoding resource block group (precoding resource block group, PRG), a bandwidth part (bandwidth part, BWP), a resource element (resource element, RE) (which may also be referred to as a resource unit), a carrier, a serving cell, or the like. Optionally, one subchannel may include one or more RBs. The RBG may be a set of contiguous virtual resource blocks (virtual resource block, VRB).

The frequency unit may be used as a granularity (or unit) of a frequency-domain resource (or a frequency resource). The frequency-domain unit includes one or more frequency-domain subunits, to be specific, the frequency-domain subunit is a division unit or a composition unit of the frequency-domain unit. For example, the frequency-domain unit is an RB, and the frequency-domain subunit is a subcarrier.

A first-type frequency-domain unit and a second-type frequency-domain unit in embodiments of this application may be frequency-domain units of a same type, or may be frequency-domain units of different types. For example, the first-type frequency-domain unit is an RB, and the second-type frequency-domain unit is a subcarrier; or both the first-type frequency-domain unit and the second-type frequency-domain unit are RBs. The first-type frequency-domain unit includes one or more first-type frequency-domain subunits. Similarly, the second-type frequency-domain unit includes one or more second-type frequency-domain subunits. For example, both the first-type frequency-domain unit and the second-type frequency-domain unit are RBs, and both the first-type frequency-domain subunit and the second-type frequency-domain subunit are subcarriers.

### 3. Signal

The signal is a symbol, data, a message, or the like transmitted via a medium (for example, an electromagnetic wave, a light wave, a sound wave, or the like), and the signal can be decoded and understood by a receive end. The signal may be an analog signal, a digital signal, or the like. The signal may be data or a message. The data may be a to-be-sent data packet, modulated data, a frequency-domain signal or a time-domain signal generated after the data is mapped to a time-frequency resource, or the like. The signal may alternatively be control information. The control information may be control information of a physical layer, or may be control information of an upper layer. This is not limited herein.

The signal is, for example, a reference signal (reference signal, RS). The reference signal may also be referred to as a pilot signal or a pilot, and is a known signal. For example, the reference signal may be a signal provided by a transmit end for the receive end for channel estimation, channel sounding, data demodulation, or the like. The reference signal includes an uplink reference signal and a downlink reference signal. The uplink reference signal includes, for example, a demodulation reference signal (demodulation reference signal, DMRS) and a sounding reference signal (sounding reference signal, SRS). The DMRS may include, for example, a DMRS used for physical uplink control channel (physical uplink control channel, PUCCH) demodulation (which may be briefly referred to as DMRS for PUCCH) and a DMRS used for physical uplink control channel (physical uplink shared channel, PUSCH) demodulation (which may be briefly referred to as DMRS for PUCCH). The downlink reference signal includes, for example, a channel state information reference signal (channel state information reference signal, CSI-RS), a cell-specific reference signal (cell-specific reference signal, C-RS/CRS), and a positioning reference signal (positioning reference signal, P-RS/PRS).

There are a plurality of types of reference signals. With continuous evolution of a standard, a name of the reference signal may change, and more reference signals may emerge. This is not specifically limited herein.

A first signal in embodiments of this application may be a symbol, a reference signal, or the like. This is not limited herein. The first signal may be a signal, or may be a group of signals. This is not specifically limited herein.

### 4. Repeated transmission

To improve transmission effects, a time-domain repetition-based sending technology is introduced. The time-domain repetition-based technology may be simply understood as that a to-be-sent signal is transmitted (or repeatedly transmitted) in time domain a plurality of times, to improve a possibility that a receive end successfully receives the signal.

### 5. Number of repetitions

The number of repetitions is a number of times of repeatedly transmitting a signal. Alternatively, it may be stated as that the number of repetitions indicates a number of times of repeatedly transmitting a signal. Alternatively, the number of repetitions may be understood as a total number of times of transmitting a signal in one transmission. Optionally, an English description may be: number of repetitions. Optionally, the number of repetitions is a number of repetitions of a signal in time domain, a number of repetitions of a signal in frequency domain, a number of repetitions of a signal in code domain, or a number of repetitions of a signal in space domain. Optionally, the space domain may be a spatial beam direction, a precoding matrix index, or the like.

Optionally, in embodiments of this application, the number of repetitions may be a total number of times of signal spectrum spreading and retransmission, may be a number of times of repeatedly transmitting a spread signal as a whole, may be a total quantity of resources occupied by a signal in entire time domain, may be a total quantity of independent resources occupied by a signal in entire time domain, may be a total quantity of resources occupied by a signal in entire frequency domain, may be a total quantity of independent resources occupied by a signal in entire time domain, may be a total quantity of resources occupied by a signal in time-frequency domain, or may be a total quantity of independent resources occupied by a signal in time-frequency domain. This is not limited in this application.

For example, each signal occupies one slot before spreading processing, a time-domain spreading length of the signal is 4, and a spread signal is repeatedly transmitted. A spread and repeated signal occupies 16 slots in total. If the number of repetitions is a total quantity of resources occupied by the signal in entire time domain, the number of repetitions may be the 16 slots occupied by the signal. If the number of repetitions is a number of times of repeatedly transmitting the spread signal as a whole, the number of repeated transmissions may be 16/4 = 4.

Alternatively, each signal occupies one subcarrier before spreading processing, a frequency-domain spreading length of the signal is 2, and a spread signal is repeatedly transmitted. A spread and repeated signal occupies four subcarriers in total. If the number of repetitions is a total quantity of resources occupied by the signal in entire frequency domain, the number of repetitions may be the four subcarriers occupied by the signal. If the number of repetitions is a number of times of repeatedly transmitting the spread signal as a whole, the number of repeated transmissions may be 4/2 = 2.

Alternatively, each signal occupies one time-frequency resource before spreading processing, a frequency-domain spreading length of the signal is 4, and a spread signal is repeatedly transmitted. A spread and repeated signal occupies eight time-frequency resources in total. If the number of repetitions is a total quantity of resources occupied by the signal in entire frequency domain, the number of repetitions may be the eight time-frequency resources occupied by the signal. If the number of repetitions is a number of times of repeatedly transmitting the spread signal as a whole, the number of repeated transmissions may be 8/4 = 2.

The number of repetitions may be applied in uplink transmission, for example, applied in (applied in) physical uplink shared channel (physical uplink shared channel, PUSCH) transmission, may be applied in downlink transmission, may be applied in sidelink (sidelink, SL) (which may be briefly referred to as a sidelink communication link, a side link, a direct link, a side-link, or a secondary link) transmission, or the like.

A first number of repetitions in embodiments of this application is a number of repetitions of a first signal, or may be understood as a number of times of repeatedly transmitting first data. A value of the first number of repetitions is represented by Nᵣₑₚ. Actually, a manner of representing the value of the first number of repetitions is not limited.

### 6. Transmission in a single second-type time-domain unit and transmission in a plurality of second-type time-domain units (or transmission across second-type time-domain units)

Transmission in a single second-type time-domain unit and transmission in a plurality of second-type time-domain units are signal transmission modes (that is, transmission modes).

Transmission in a single second-type time-domain unit means that a signal occupies a single second-type time-domain unit. Transmission across second-type time-domain units means that a signal occupies a plurality of second-type time-domain units. For example, if the second-type time-domain unit is a slot, transmission in a single second-type time-domain unit may also be referred to as single-slot transmission, and transmission across second-type time-domain units may be referred to as cross-slot transmission.

For example, the signal is a transport block (transport block, TB), and the second-type time-domain unit is a slot. The TB may be a TB occupying a single slot. This may also be referred to as single-slot transmission of the TB. Alternatively, the TB may be a TB occupying a plurality of slots (TB over multiple slots, TBoMS). This may also be referred to as cross-slot or multi-slot transmission of the TB.

Similarly, repeated transmission may also include repeated transmission in a single second-type time-domain unit and repeated transmission across second-type time-domain units. Repeated transmission in a single second-type time-domain unit is repeated transmission for a single second-type time-domain unit, and repeated transmission across second-type time-domain units is repeated transmission for a plurality of second-type time-domain units.

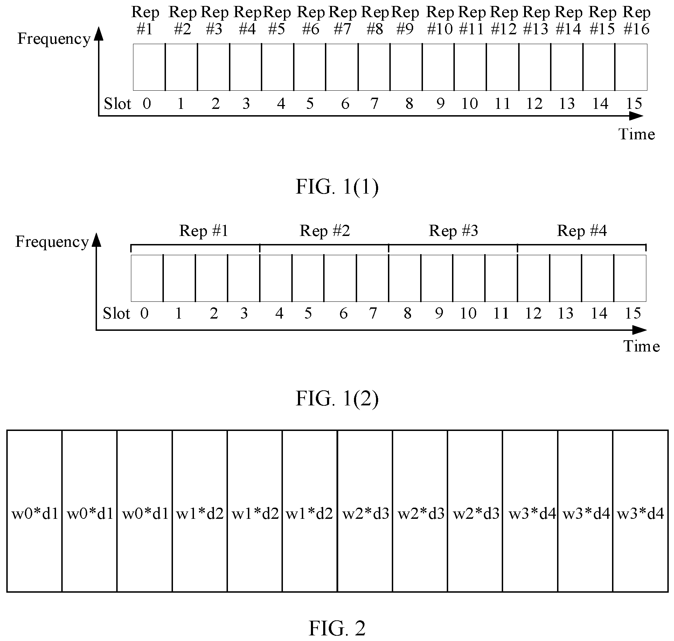

FIG. 1(1) and FIG. 1(2) are diagrams of repeatedly transmitting a TB. In FIG. 1(1), for example, each TB occupies one slot. As shown in FIG. 1(1), the TB is repeatedly transmitted 16 times in slots, which are specifically shown as Rep #1 to Rep #16 shown in FIG. 1(1). Rep #1 represents a 1^{st} repeated transmission, and Rep #16 represents a 16^{th} repeated transmission. Each time the TB is repeatedly transmitted, one slot is occupied. For example, a slot 0 is occupied for the 1^{st} repeated transmission, a slot 1 is occupied for a 2^{nd} repeated transmission, a slot 2 is occupied for a 3^{rd} repeated transmission, and so on. 16 repeated transmissions of the TB occupy 16 slots, that is, the slot 0 to a slot 15.

In FIG. 1(2), for example, each TB occupies four slots. As shown in FIG. 1(2), the TB is repeatedly transmitted four times in slots, which are specifically shown as Rep #1 to Rep #4 shown in FIG. 1(2). Rep #1 represents a 1^{st} repeated transmission, and Rep #4 represents a 4^{th} repeated transmission. Each time the TB is repeatedly transmitted, four slots are occupied. For example, a slot 0 to a slot 3 are occupied for the 1^{st} repeated transmission, a slot 4 to a slot 7 are occupied for a 2^{nd} repeated transmission, a slot 8 to a slot 11 are occupied for a 3^{rd} repeated transmission, a slot 12 to a slot 15 are occupied for the 4^{th} repeated transmission, and so on. Four repeated transmissions occupy 16 slots, that is, the slot 0 to the slot 15.

A first number of repetitions in embodiments of this application is a number of repetitions corresponding to a first signal, to be specific, a number of times of repeatedly transmitting the first signal. The first number of repetitions may be represented as Nᵣₑₚ. Alternatively, it may be stated as that a value of the first number of repetitions is Nᵣₑₚ. Nᵣₑₚ is a positive integer. In embodiments of this application, Nᵣₑₚ is used for representing the first number of repetitions. Actually, a manner of representing the first number of repetitions is not limited. A value of Nᵣₑₚ may be 1, 2, 3, 4, 7, 8, 12, 16, 20, 24, 28, 32, or another value. This is not specifically limited herein.

The first number of repetitions is used for repeatedly transmitting the first signal in a second-type time-domain unit. Therefore, it may be considered that the first number of repetitions is in units of a second-type time-domain subunit, to be specific, the first signal is repeatedly transmitted in units of the second-type time-domain subunit. For example, if the second-type time-domain unit is a slot, and the second-type time-domain subunit is a symbol, the first number of repetitions may be in units of the symbol. In addition, in embodiments of this application, a transmission mode for transmitting the first signal is referred to as a first transmission mode. The first transmission mode may mean that the first signal is transmitted across first-type time-domain units (or referred to as a plurality of first-type time-domain units) or the first signal is transmitted in a single first-type time-domain unit.

### 7. Spreading (spreading)

Spreading may also be referred to as spreading processing, spectrum spreading processing, spectrum spreading, or other spreading, and is a method of directly multiplying a specific sequence (for ease of description, the sequence is referred to as a sequence #A) by one signal or a group of same signals and spreading a signal or signals obtained through multiplication to more resources for transmission in time domain and/or frequency domain. The specific sequence is a spreading sequence, a spectrum spreading sequence, or an orthogonal code (orthogonal cover code, OCC). One spectrum spreading sequence may include one or more elements (which may also be referred to as a code element or code elements). A length of the spreading sequence is a spreading length, a spreading factor, a spectrum spreading factor, a spectrum spreading length, a length (length) of the orthogonal code (which may be abbreviated as OCC-length), or the like.

For example, a to-be-sent signal is d, and d may represent the to-be-sent signal (which may be one signal or a group of signals). If the spreading sequence #A is used to perform a spreading operation on the signal, a spread signal b may be represented as the following formula (1). ${b}_{i} = {w}_{i} ⋅ d , where i = 0 , … , {N}_{SF} - 1$ (1)

b = *b*₀, ... , b_{*NSF*-1}, and N_{S} represents the spreading length. For ease of description, wi is referred to as an element of the sequence #A in the following, in other words, the sequence #A whose length is N_{SF} includes N_{SF} elements. The element may alternatively be replaced with another name, for example, the code element.

FIG. 2 is a diagram of spreading processing. As shown in FIG. 2, it is assumed that a to-be-transmitted signal d occupies 12 resources, a length of a spreading sequence is 4, and the spreading sequence is [w₀ w₁ w₂ w₃]. After the to-be-transmitted signal d is spread, signals obtained on the 12 resources are w₀*d1, w₀*d1, w₀*d1, w₁*d2, w₁*d2, w₁*d2, w₂*d3, w₂*d3, w₂*d3, w₃*d4, w₃*d4, and w₃*d4. di represents a signal corresponding to an i^{th} element (that is, wᵢ₋₁) in the spreading sequence. It may be understood that content carried on different resources may be the same or may be different. This is not limited herein. As shown in FIG. 2, for example, in a group of symbols (that is, the first three symbols) corresponding to w₀, content carried on different symbols may be the same or may be different. For ease of description, in FIG. 2, the same di is used as an example for description. This is not limited herein. In addition, content corresponding to different elements in the spreading sequence may be the same or may be different. As shown in FIG. 2, for example, content carried in symbols corresponding to w₀ and w₁ may be the same or may be different. This is not limited herein. Optionally, the 12 resources may include a frequency-domain resource, a space-domain resource, or a time-domain resource (for example, an OFDM symbol). A specific form of the sequence #A is not limited herein.

In a possible design, the spreading sequence (for example, the sequence #A) is a binary sequence. For example, if the length of the spreading sequence is 2, the spreading sequence may be either of the following: [+1 +1] or [+1 -1]. For another example, if the length of the spreading sequence is 4, the spreading sequence may be any one of the following: [+1 +1 +1 +1], [+1 +1 -1 -1], [+1 -1 +1 -1], or [+1 -1 -1 +1]. For another example, if the length of the spreading sequence is 8, the spreading sequence may be any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 - 1 -1], [+1 -1 +1 -1 -1 +1 -1 +1], [+1 +1 -1 -1 -1 -1 +1 +1], or [+1 -1 -1 +1 -1 +1 +1 -1].

In another possible design, the spreading sequence is a complex sequence. For example, if the length of the spreading sequence is 2, the spreading sequence may be either of the following: [+1 +j] or [+1 -j]. For another example, if the length of the spreading sequence is 4, the spreading sequence may be any one of the following: [+1 +1 +1 +1], [+1 -j +1 +j], [+1 -1 +1 -1], or [+1 +j -1 -j]. For another example, if the length of the spreading sequence is 8, the spreading sequence may be any one of the following: [+1 +1 +1 +1 +1 +1 +1 +1], [+1 -1 +1 -1 +1 -1 +1 -1], [+1 +1 -j -j -1 -1 +j +j], [+1 -1 -j +j -1 +1 +j -j], [+1 +1 -1 -1 +1 +1 -1 -1], [+1 -1 -1 +1 +1 -1 -1 +1], [+1 +1 +j +j -1 -1 -j -j], or [+1 -1 +j -j -1 +1 -j +j].

Optionally, a row or a column in a DFT matrix or an IDFT matrix may be used as a spreading sequence.

Optionally, for example, for a spreading sequence whose length is *N_{SF},* there are a total of a maximum of *N_{SF}* spreading sequences described in the following manner: ${w}_{n} \left(k\right) = {e}^{- j \frac{2 πnk}{{N}_{SF}}} ,$ *where k* = 0,1,...,*N_{SF}* -1,*n* = 0,1,...,*N_{F}* -1; or ${w}_{n} \left(k\right) = {e}^{j \frac{2 πnk}{{N}_{SF}}} ,$ *where k =* 0,1,...,*N_{SF}* -1,*n* = 0,1,...,*N_{SF} -* 1
*wₙ*(*k*) represents a k^{th} element in an n^{th} sequence.

The following further describes time-domain spreading by using an example in which an OFDM symbol is spread. For example, a signal over a time-domain symbol in a symbol n satisfies the following formula (2). ${s}_{\left(l⋅R+m\right)} \left(t\right) = {w}_{n} \left(\left⌊m/R\right⌋\right) ⋅ {s}_{\left(l⋅R+m mod R\right)} \left(t\right)$ (2)
*m* = 0,1, ..., *N_{S}* · *R* -1, and *l* = 0,1, *..., N_{SF}* - 1.

*sₙ*(*t*) represents the signal over the time-domain symbol in the symbol *n, wₙ*(*m*) represents an m^{th} element in a spreading sequence numbered n, *N_{S}* represents a length of the spreading sequence, *R* represents a quantity of resources corresponding to one element in the spreading length and represents a quantity of symbols corresponding to one element in the formula (2), *t* represents time, and $\left⌊x\right⌋$ represents rounding x down.

Optionally, *sₙ*(*t*) represents a time-domain signal obtained through inverse fast Fourier transform (inverse fast fourier transform, IFFT) performed on a signal (for example, data and/or a reference signal) that has been mapped to subcarriers in a symbol *l*.

Optionally, in the foregoing formula (2), when *R* = 1, spreading (or time-domain spreading) may be referred to as direct spreading (spreading).

Optionally, in the foregoing formula (2), when *R* > 1, spreading (or time-domain spreading) may be referred to as block-wise spreading (block-wise spreading).

Optionally, in the foregoing formula (2), when *sₙ*(*t*) is replaced with a frequency-domain signal *d*(*k*), a description manner of frequency-domain spreading may also be provided. For example, the frequency-domain signal *d*(*k*) satisfies a formula (3). $d \left(l⋅R+m\right) = {w}_{n} \left(\left⌊m/R\right⌋\right) ⋅ d \left(l⋅R+m mod R\right)$ (3)

*R* represents a quantity of resources corresponding to one element in the spreading length, and R in the formula (3) represents a quantity of frequency-domain resources corresponding to one element.

The spreading sequence may also be referred to as a time-domain spreading sequence, a frequency-domain spreading sequence, a time-frequency spreading sequence, or the like. A name of the spreading sequence is not limited in embodiments of this application.

Spreading processing may be classified into different spreading types (or referred to as spreading manners). A basis of classification into spreading types includes a resource type of spreading processing. With this classification basis, the spreading types include, for example, time-domain spreading, frequency-domain spreading, and time-frequency spreading.

Time-domain spreading means that spreading processing is performed on a signal in time domain (for example, a first-type time-domain unit). First-type time-domain units used for carrying a signal may be contiguously distributed or non-contiguously distributed. This is not limited herein. For example, the first-type time-domain units used for carrying a signal may be consecutive symbols or slots, or may be inconsecutive (which means, for example, that symbols are spaced by a specific length) symbols or slots.

Frequency-domain spreading means that spreading processing is performed on a signal in frequency domain (for example, a first-type frequency-domain unit). First-type frequency-domain units used for carrying a signal may be contiguously distributed or distributed in a comb division form. This is not limited herein. Comb division means that the first-type frequency-domain units used for carrying a signal are non-contiguously distributed. Optionally, in comb division, the frequency-domain units used for carrying a signal may be determined in a manner of using one unit in every *N_{comb}* units. A value of a frequency spacing *N_{comb}* may be referred to as a comb size (comb size). Optionally, different devices on a same symbol may implement multiplexing by occupying different frequency-domain offset values (comb offset).

Time-frequency spreading means that spreading processing is performed on a signal in both time domain and frequency domain.

The basis of classification into spreading types may alternatively include a quantity of first-type time-domain units for each time of processing. With this classification basis, spreading processing includes, for example, spreading in a single first-type time-domain unit and spreading across first-type time-domain units. Spreading across first-type time-domain units may also be referred to as spectrum spreading across a plurality of first-type time-domain units. If the first-type time-domain unit is a slot, spreading across first-type time-domain units may be referred to as TBoMS spreading.

Refer to the following Table 1. Table 1 shows examples of a spreading type.

**Table 1**

| Scenario | Spreading type | | |
|---|---|---|---|
| | Single-slot symbol spreading, (or) cross-slot spreading, or no time-domain spreading | No frequency division, or frequency division, or comb division, or comb division+frequency division | Without TBoMS or with TBoMS |
| 1 | Single-slot symbol spreading | No frequency division | Without TBoMS |
| 2 | Cross-slot spreading | No frequency division | Without TBoMS |
| 3 | No time-domain spreading | Frequency division | Without TBoMS |
| 4 | No time-domain spreading | Comb division | Without TBoMS |
| 5 | No time-domain spreading | Comb division+frequency division | Without TBoMS |
| 6 | Single-slot symbol spreading | Frequency division | Without TBoMS |
| 7 | Single-slot symbol spreading | Comb division | Without TBoMS |
| 8 | Single-slot symbol spreading | Comb division+frequency division | Without TBoMS |
| 9 | Cross-slot spreading | Frequency division | Without TBoMS |
| 10 | Cross-slot spreading | Comb division | Without TBoMS |
| 11 | Cross-slot spreading | Comb division+frequency division | Without TBoMS |
| 12 | Symbol spreading (or referred to as symbol-level spreading) | No frequency division | With TBoMS |
| 13 | Slot spreading (slot-level spreading) | No frequency division | With TBoMS |
| 14 | No time-domain spreading | Frequency division | With TBoMS |
| 15 | No time-domain spreading | Comb division | With TBoMS |
| 16 | No time-domain spreading | Comb division+frequency division | With TBoMS |
| 17 | Single-slot symbol spreading | Frequency division | With TBoMS |
| 18 | Single-slot symbol spreading | Comb division | With TBoMS |
| 19 | Single-slot symbol spreading | Comb division+frequency division | With TBoMS |
| 20 | Cross-slot spreading | Frequency division | With TBoMS |
| 21 | Cross-slot spreading | Comb division | With TBoMS |
| 22 | Cross-slot spreading | Comb division+frequency division | With TBoMS |

Certainly, Table 1 shows a plurality of types of spectrum spreading processing, and there may also be another type of spectrum spreading processing. This is not specifically limited herein.

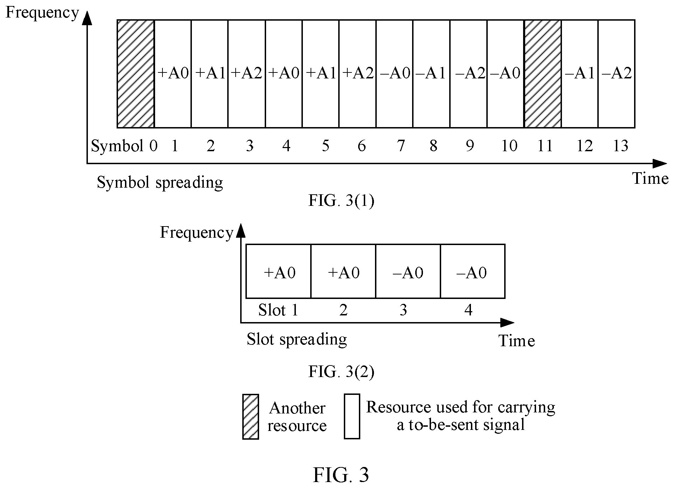

The following describes types of spreading processing by using an example with reference to diagrams of spreading processing shown in FIG. 3(1) and FIG. 3(2) to FIG. 10. Other resources in FIG. 3(1) and FIG. 3(2) to FIG. 10 are resources that are not used for carrying a signal. In FIG. 3(1) and FIG. 3(2) to FIG. 10, a horizontal coordinate represents time (t), and a vertical coordinate represents frequency (f).

FIG. 3(1) and FIG. 3(2) show time-domain spreading. In FIG. 3(1), symbol spreading (or referred to as symbol-level spreading) is used as an example. To be specific, an example in which a first-type time-domain unit is a symbol is used. Signals include A0, A1, and A2, and a spreading sequence is [+1, +1, -1, -1]. To be specific, the signals are spread by four times in symbols. In this case, +A0, +A1, +A2, +A0, +A1, +A2, -A0, -A1, -A2, -A0, -A1, and A2 are respectively sent in sequence in a symbol 1 to a symbol 10, a symbol 12, and a symbol 13. Optionally, any one of the signals A0, A1, and A2 may be, for example, a baseband signal in time domain, or may be, for example, the signal *sₙ*(*t*) in the formula (2).

In FIG. 3(2), slot spreading (or referred to as slot spreading) is used as an example. To be specific, an example in which a first-type time-domain unit is a slot is used. A signal includes A0, and a spreading sequence is [+1, +1, -1, -1]. To be specific, the signal is spread by four times in slots. In this case, +A0, +A0, -A0, and -A0 are obtained in sequence in a slot 1 to a slot 4. In FIG. 3(2), optionally, frequency-domain spreading or comb division processing may be further performed on the signal in each slot. Optionally, in the example in FIG. 3(2), regardless of whether spreading processing is further performed in frequency domain, time-domain spreading is performed by using signals in entire time domain as a whole. To be specific, the signals (for example, symbols) in entire time domain each need to be correspondingly multiplied by an element corresponding to the spreading sequence.

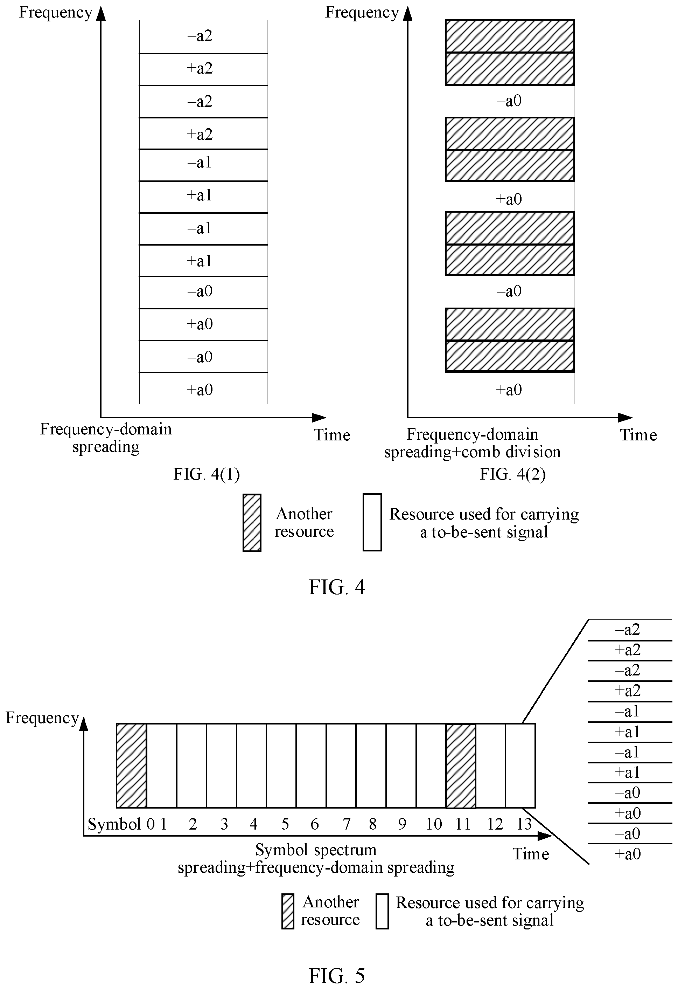

FIG. 4(1) and FIG. 4(2) show frequency-domain spreading. In FIG. 4(1), frequency-domain spreading and frequency domain without comb division are used as an example. As shown in FIG. 4(1), signals include a0, a1, and a2, and a spreading sequence is [+1 -1 +1 -1]. To be specific, the signals are spread by four times in frequency domain, to obtain signals +a0, -a0, +a0, -a0, +a1, -a1, +a1, -a1, +a2, -a2, +a2, and -a2. Optionally, the signals including a0, a1, and a2 may be signals in frequency domain, for example, *d*(*k*) in the formula (3).

In FIG. 4(2), frequency-domain spreading and frequency domain with comb division are used as an example. In FIG. 4(2), frequency-domain spreading, frequency domain with comb division, and a comb size of three subcarriers are used as an example. A signal includes a0, and a spreading sequence is [+1 -1 +1 -1]. To be specific, the signal is spread by four times in frequency domain. In this case, +a0, -a0, +a0, and -a0 are obtained, and two adjacent elements are spaced by three subcarriers in frequency domain.

FIG. 5 shows time-frequency spreading. To be specific, spreading processing is performed on a signal in both time domain and frequency domain. In FIG. 5, an example in which signals are carried in a symbol 1 to a symbol 10, a symbol 12, and a symbol 13 is used for illustration. FIG. 5 shows symbol spreading. As shown in FIG. 5, signals in a symbol or all symbols (for example, a symbol 13) are spread in frequency domain. For example, the signals in the symbol 13 include a0, a1, and a2, and a spreading sequence is [+1 -1 +1 -1]. To be specific, the signals are spread by four times in frequency domain. In this case, +a0, -a0, +a0, -a0, +a1, -a1, +a1, -a1, +a2, -a2, +a2, and -a2 are carried in sequence in the symbol 13. Further, the signals carried in the symbol 13 may be converted to time domain, and spreading processing is performed, in time domain, on signals obtained through conversion. Optionally, a spreading length corresponding to time-domain spreading and a spreading length corresponding to frequency-domain spreading may be the same or different. This is not limited herein. Optionally, time-frequency spreading similar to that for the symbol 13 may also be performed on another symbol used for carrying a signal. Optionally, frequency-domain spreading sequences for all symbols may be the same or different. This is not limited herein. Optionally, time-domain spreading sequences for all symbols may also be the same or different. This is not limited herein.

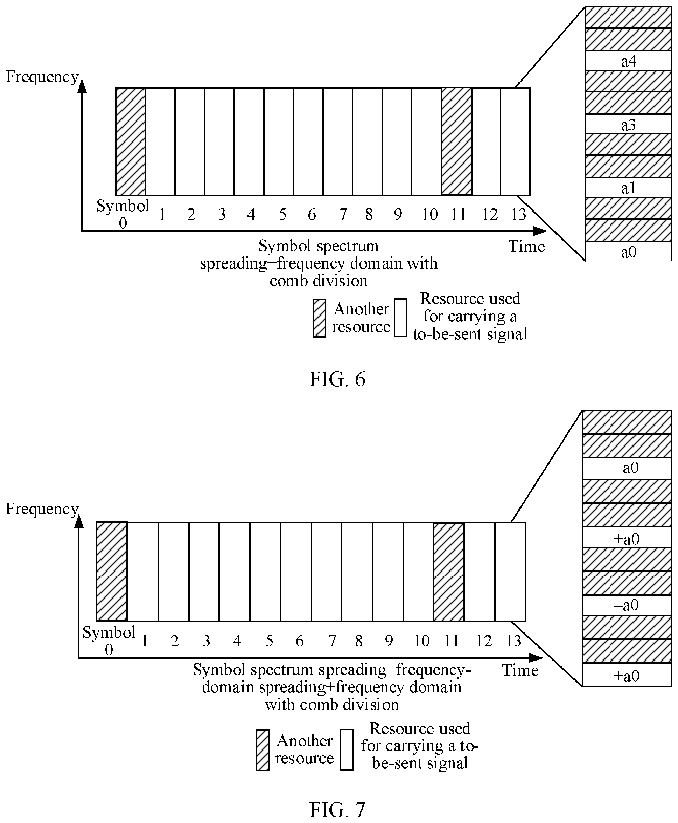

FIG. 6 shows time-domain spreading. To be specific, spreading processing is performed on all signals in time domain. In FIG. 6, frequency domain with comb division and a comb size of three subcarriers are used as an example. In FIG. 6, an example in which signals are carried in a symbol 1 to a symbol 10, a symbol 12, and a symbol 13 is used for illustration. FIG. 6 shows symbol spreading. As shown in FIG. 6, the signals in the symbol 13 include a0, a2, a3, and a4. In this case, a0, a2, a3, and a4 are carried in sequence in the symbol 13, and two adjacent elements are spaced by three subcarriers in frequency domain. Optionally, in FIG. 6, in addition to the symbol 13, comb division similar to that for the symbol 13 may also be performed on another symbol used for carrying a signal. Optionally, frequency spacings for comb division in the symbols may be the same or may be different. This is not limited in embodiments of this application.

FIG. 7 shows time-frequency spreading. To be specific, spreading processing is performed on a signal in both time domain and frequency domain. In FIG. 7, frequency domain with comb division and a comb size of three subcarriers are used as an example. In FIG. 7, an example in which signals are carried in a symbol 1 to a symbol 10, a symbol 12, and a symbol 13 is used for illustration. FIG. 7 shows symbol spreading performed in time domain. As shown in FIG. 7, a signal in a symbol (for example, a symbol 13) is spread in frequency domain. For example, the signal in the symbol 13 includes a0, and a spreading sequence is [+1 -1 +1 -1]. To be specific, the signal is spread by four times in frequency domain. In this case, +a0, -a0, +a0, and -a0 are carried in sequence in the symbol 13, and two adjacent elements are spaced by three subcarriers in frequency domain. Further, optionally, frequency-domain spreading similar to that for the symbol 13 may also be performed on another symbol used for carrying a signal. Optionally, frequency spacings for comb division in the symbols may be the same or may be different. This is not limited in embodiments of this application.

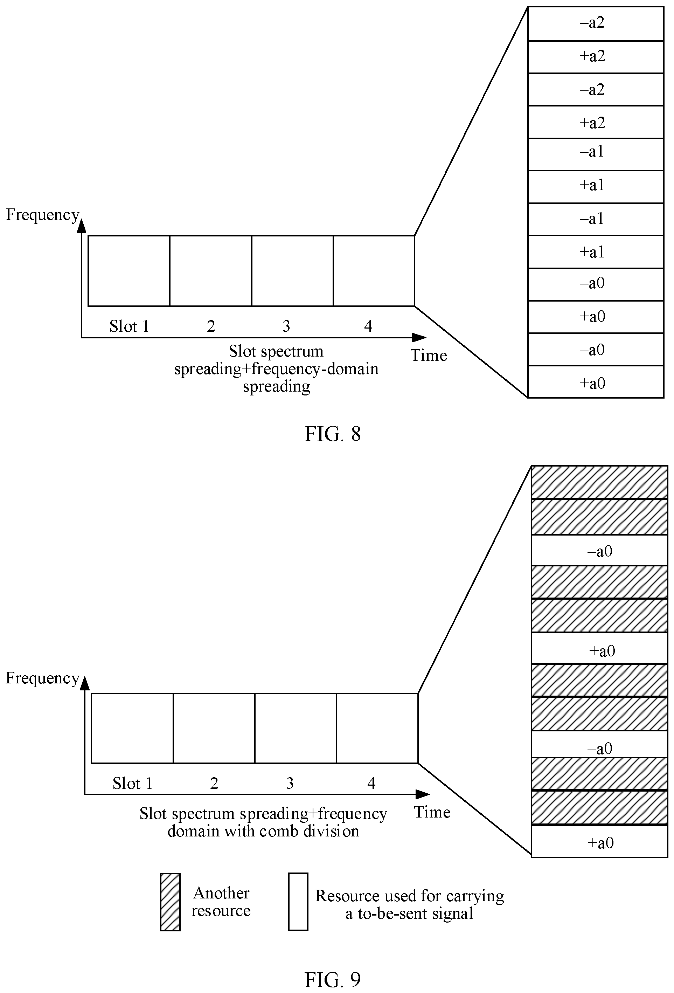

FIG. 8 shows time-frequency spreading. To be specific, spreading processing is performed on a signal in both time domain and frequency domain. In FIG. 8, frequency domain without comb division is used as an example. In FIG. 8, an example in which signals are carried in a slot 1 to a slot 4 is used for illustration. FIG. 8 shows slot spreading performed in time domain. As shown in FIG. 8, signals in a slot (for example, a slot 4) are spread in frequency domain. For example, the signals in the slot 4 include a0, a1, and a2, and a spreading sequence is [+1 -1 +1 - 1]. The signals are spread by four times in frequency domain. In this case, +a0, -a0, +a0, -a0, +a1, -a1, +a1, -a1, +a2, -a2, +a2, and -a2 are carried in sequence in the slot 4. Further, the signals carried in the slot 4 may be converted to time domain, and spreading processing is performed in time domain. Optionally, time-frequency spreading similar to that for the slot 4 may also be performed on another slot used for carrying a signal.

FIG. 9 shows time-domain spreading, for example, spreading processing is performed on a signal in a slot. In FIG. 9, frequency domain with comb division is used as an example. In FIG. 9, an example in which signals are carried in a slot 1 to a slot 4 is used for illustration. FIG. 9 shows slot spreading. As shown in FIG. 9, a signal in a slot (for example, the slot 4) is further spread in frequency domain. For example, the signal in the slot 4 includes a0, and a spreading sequence is [+1 -1 +1 -1]. To be specific, the signal is spread by four times in frequency domain. In this case, +a0, -a0, +a0, and -a0 are carried in sequence in the slot 4, and two adjacent elements are spaced by two subcarriers in frequency domain. Further, the signal carried in the slot 4 may be converted to time domain, and spreading processing is performed in time domain. Optionally, time-frequency spreading similar to that for the slot 4 may also be performed on another slot used for carrying a signal.

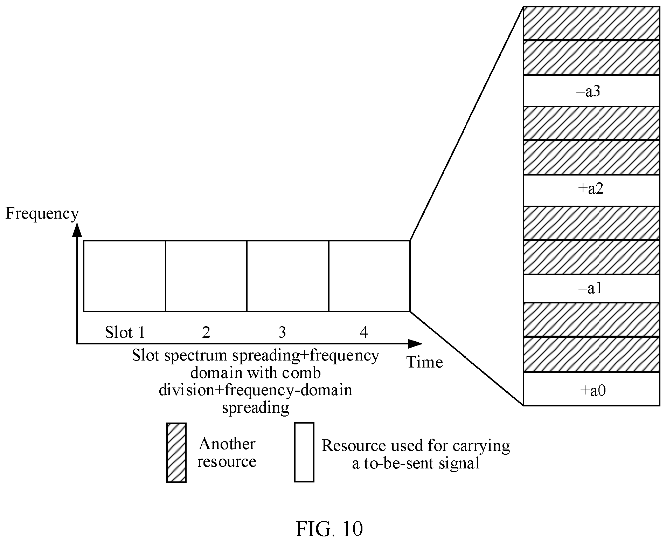

FIG. 10 shows time-domain spreading. To be specific, spreading processing is performed on a signal in both time domain (for example, a slot) and frequency domain. In FIG. 10, frequency domain with comb division is used as an example. In FIG. 10, an example in which signals are carried in a slot 1 to a slot 4 is used for illustration. FIG. 10 shows slot spreading. As shown in FIG. 10, a signal in a slot (for example, the slot 4) is spread in frequency domain. For example, the signal in the slot 4 includes A0, the AO specifically includes a0, a1, a2, and a3, and spreading sequences in both time domain and frequency domain are [+1 -1 +1 -1]. To be specific, the signal is spread by four times in frequency domain. In this case, +a0, -a1, +a2, and -a3 are carried in sequence in the slot 4, and two adjacent elements are spaced by three subcarriers in frequency domain. Further, the signal carried in the slot 4 may be converted to time domain, and spreading processing is performed in time domain. Optionally, time-frequency spreading similar to that for the slot 4 may also be performed on another slot used for carrying a signal.

When spreading processing is performed on a signal, spreading processing may be performed on the signal by using one spreading sequence. Correspondingly, in this case, the signal corresponds to the one spreading length. Alternatively, when spreading processing is performed on a signal, spreading processing may be performed on the signal by using a plurality of spreading sequences. Correspondingly, in this case, the signal corresponds to the plurality of spreading lengths.

When a signal corresponds to a plurality of spreading lengths, all the plurality of spreading lengths may be used for performing spreading processing on the signal in time domain. It may be understood as that all the plurality of spreading lengths are corresponding spreading lengths in time domain. Alternatively, all the plurality of spreading lengths may be used for performing spreading processing on the signal in frequency domain. It may be understood as that all the plurality of spreading lengths are corresponding spreading lengths in frequency domain. Alternatively, a part of the plurality of spreading lengths are used for performing spreading processing on the signal in time domain. It may be understood as that the other part of the plurality of spreading lengths are used for performing spreading processing in frequency domain. In this case, the part of the plurality of spreading lengths are corresponding spreading lengths in time domain, and the other part of the plurality of spreading lengths are corresponding spreading lengths in frequency domain.

The first signal in embodiments of this application corresponds to one or more spreading lengths. If the first signal corresponds to only one spreading length, the spreading length is the first spreading length. In this case, the first spreading length is used for performing spreading processing on the first signal in time domain, performing spreading processing on the first signal in frequency domain, or performing spreading processing on the first signal in time domain and frequency domain.

Alternatively, if the first signal corresponds to a plurality of spreading lengths, a part or all of the plurality of spreading lengths may be the first spreading length. In this case, the first spreading length is used for performing spreading processing on the first signal in time domain. For example, the first spreading length is used for performing spreading processing on a part or all, carried in time domain, of the first signal. The part or all of the first signal may be carried in a part of first-type time-domain subunits in a first-type time-domain unit. Alternatively, the first spreading length is used for performing spreading processing on the first signal in frequency domain. For example, the first spreading length is used for performing spreading processing on a part or all, carried in frequency domain, of the first signal. The part or all of the first signal may be carried in a part of first-type frequency-domain subunits in a first-type frequency-domain unit. Alternatively, the first spreading length is used for performing spreading processing on the first signal in time domain and frequency domain. For example, the first spreading length is used for performing spreading processing on a part or all, carried in time domain, of the first signal, and performing spreading processing on a part or all, carried in frequency domain, of the first signal.

The first spreading length in embodiments of this application may be represented as *N_{SF}*. *N_{SF}* is a positive integer. Actually, the first spreading length may be represented in a plurality of manners. This is not specifically limited herein. A second spreading length in embodiments of this application is a spreading length other than the first spreading length in the one or more spreading lengths corresponding to the first signal. The following describes functions of the first spreading length and the second spreading length.

For example, the first spreading length is used for performing spreading processing on a first part, carried in time domain, of the first signal. The second spreading length is used for performing spreading processing on a second part, carried in time domain, of the first signal. The first part of the first signal may be carried in a first part of the first-type time-domain unit. The second part of the first signal may be carried in a second part of the first-type time-domain unit. Optionally, the first signal may include only the first part and the second part, or include more parts. This is not limited herein.

Alternatively, the first spreading length is used for performing spreading processing on a first part, carried in frequency domain, of the first signal, and the second spreading length is used for performing spreading processing on a second part, carried in frequency domain, of the first signal. The first part of the first signal may be carried in a first part of the first-type frequency-domain unit. The second part of the first signal may be carried in a second part of the first-type time-domain unit.

Alternatively, the first spreading length is used for performing spreading processing on a first part, carried in time domain, of the first signal, and the second spreading length is used for performing spreading processing on a second part, carried in frequency domain, of the first signal. The first part of the first signal may be carried in a part or all of the first-type time-domain unit. The second part of the first signal may be carried in a part or all of the first-type frequency-domain unit.

Alternatively, the first spreading length is used for performing spreading processing on a first part, carried in time domain, of the first signal. The first spreading length is further used for performing spreading processing on a third part, carried in frequency domain, of the first signal. The second spreading length is used for performing spreading processing on a second part, carried in time domain, of the first signal. The second spreading length is further used for performing spreading processing on a fourth part, carried in frequency domain, of the first signal. The first part of the first signal is, for example, carried in a first part of the first-type time-domain unit. The second part of the first signal is carried in a second part of the first-type frequency-domain unit. The third part of the first signal is, for example, carried in a second part of the first-type time-domain unit. The fourth part of the first signal is carried in a second part of the first-type frequency-domain unit.

If the first spreading length is used for performing spreading processing on the first signal in the first-type time-domain unit, the first spreading length is in units of the first-type time-domain subunit. For example, if the first-type time-domain unit is a slot, and the first-type time-domain subunit is a symbol, the first spreading length is in units of the symbol. Alternatively, if the first spreading length is used for performing spreading processing on the first signal in the first-type frequency-domain unit, the first spreading length is in units of the first-type frequency-domain subunit. Alternatively, if the first spreading length is used for performing spreading processing on the first signal in the first-type frequency-domain unit and the first-type time-domain unit, the first spreading length is in units of the first-type frequency-domain subunit and the first-type time-domain subunit. Similarly, content of a unit of the second spreading length is similar to the content of the unit of the first spreading length. Details are not listed herein one by one.

In embodiments of this application, a spreading sequence corresponding to the first spreading length is a first spreading sequence. There may be one or more first spreading sequences. This is not specifically limited herein. Similarly, a spreading sequence corresponding to the second spreading length is a second spreading sequence. There may also be one or more second spreading sequences. This is not specifically limited herein. In addition, in embodiments of this application, a type (or a manner) of spreading the first signal is referred to as a first spreading type, and the first spreading type includes time-domain and/or frequency-domain spreading processing on the first signal. For example, the first spreading type includes time-domain spreading, frequency-domain spreading, time-frequency spreading, or other spreading.

### 8. Frequency hopping (frequency hopping)

Frequency hopping is a wireless communication technology that is used for transmitting data by fast switching between different frequencies. In frequency hopping communication, a signal frequently hops between different frequencies. In this way, interference can be reduced, communication security can be improved, and a frequency diversity gain during signal transmission can be obtained. A principle of frequency hopping communication lies in that a group of frequency sequences are pre-agreed between a transmit end and a receive end, and in a communication process, these frequencies are used in sequence for data transmission according to an agreed sequence. The transmit end and the receive end hop at a same frequency in each time period to keep synchronization. This frequency hopping mode may be dynamically changed in communication, so that interference and eavesdropping can be effectively resisted. In short, frequency hopping means sending of a signal at a plurality of non-contiguous frequencies.

Frequency hopping includes intra-slot frequency hopping and inter-slot frequency hopping. Intra-slot frequency hopping means that first-type time-domain units corresponding to a plurality of frequencies are located in one slot, and inter-slot frequency hopping means that first-type time-domain units corresponding to a plurality of frequencies are located in different slots.

The first frequency and the second frequency in embodiments of this application are different frequencies in a case of transmitting the first signal in a frequency hopping manner. The first frequency may correspond to one or more first-type time-domain units. Similarly, the second frequency may also correspond to one or more first-type time-domain units. In the case of transmitting the first signal in a frequency hopping manner, the first spreading length is a spreading length corresponding to a frequency, for example, may be a spreading length corresponding to the first frequency or the second frequency. In other words, the spreading length corresponding to the first frequency may be different from or the same as the spreading length corresponding to the second frequency. This is not specifically limited herein.

In addition, frequency hopping in embodiments of this application may be intra-slot frequency hopping, or may be inter-slot frequency hopping. This is not specifically limited herein.

### 9. PUSCH time-domain resource allocation (time-domain resource allocation, TDRA) list (list)

A PUSCH time-domain resource allocation list (for example, TimeDomainResourceAllocationList) in an information element is used for configuring a time-domain relationship between a PDCCH and a PUSCH. The PUSCH time-domain resource allocation list includes one or more time-domain resource allocations (for example, PUSCH-TimeDomainResourceAllocation). A network indicates, in an uplink grant (for example, a UL grant), a configured time-domain allocation that should be used by a terminal device for the uplink grant. A quantity of entries in the PUSCH time-domain resource allocation list determines a bit width of a downlink control information (downlink control information, DCI) field. If a value in the DCI field is 0, it indicates a first element in the PUSCH time-domain resource allocation list. If a value in the DCI field is 1, it indicates a second element in the PUSCH time-domain resource allocation list. The rest may be deduced by analogy.

The foregoing nouns (for example, the number of repetitions, the spreading length, the spreading sequence, and the like) may have other names, or other nouns may emerge as a standard continuously evolves. This is not specifically limited herein.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

In embodiments of this application, an "indication" may include a direct indication, an indirect indication, an explicit indication, and an implicit indication. When a piece of indication information is described as indicating A, it may be understood that the indication information carries A, directly indicates A, or indirectly indicates A. In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or may be different.

In embodiments of this application, "sending" and "receiving" indicate signal transfer directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

As described above, the repetition-based uplink coverage enhancement technology needs to allocate more resources to a signal. This reduces an overall capacity of a communication system.

In view of this, an embodiment of this application provides a communication solution. In this solution, a first communication apparatus determines a first spreading length based on a first number of repetitions, and the first communication apparatus sends first indication information to a second communication apparatus. The first indication information indicates the first spreading length, so that a manner of indicating the first spectrum spreading length is provided. In this way, a signal sending apparatus (for example, the first communication apparatus or the second communication apparatus) may spread and repeatedly transmit a signal based on the first spreading length and the first number of repetitions. Spreading processing supports a plurality of users in reuse. Therefore, resources occupied by a single user are relatively reduced, and the overall capacity of the communication system is increased. In addition, the first spreading length is related to the first number of repetitions. In this way, the first spreading length may be determined by using the first number of repetitions, or the first number of repetitions may be determined by using the first spreading length, so that it is unnecessary to separately indicate the first spreading length and the first number of repetitions. This can also reduce signaling overheads.

Solutions in embodiments of this application may be applied to various communication networks (or systems) including the first communication apparatus and the second communication apparatus. The first communication apparatus may indicate the first spreading length to the second communication apparatus. The first spreading length is related to the first number of repetitions. In this way, the second communication apparatus may send a signal or receive a signal by using the first spreading length and the first number of repetitions. Alternatively, the first communication apparatus may send a signal or receive a signal by using the first spreading length and the first number of repetitions.

Communication solutions provided in embodiments of this application may be applied to various communication networks, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may also be applied to a future communication system, for example, a 6th generation (6th generation, 6G) mobile communication system. The technical solutions provided in this application may also be applied to device-to-device (device-to-device, D2D) communication, a sidelink (sidelink, SL) system, machine-to-machine (machine-to-machine, M2M) communication, machine-type communication (machine-type communication, MTC), and an Internet of things (internet of things, IoT) communication system. An SL may also be referred to as a sidelink communication link, a side link, a sidelink, a direct link, a side-link, a secondary link, or the like. The SL may include a link for device-to-device (device-to-device, D2D) communication, vehicle-to-everything (or referred to as anything) (vehicle-to-everything, V2X) communication, or sidelink on unlicensed spectrum (sidelink on unlicensed spectrum, SL-U) communication, or the like. V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. Embodiments of this application may also be applied to a non-terrestrial communication network (non-terrestrial network, NTN) system such as inter-satellite communication, satellite communication, and the like.

In a possible design, a satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

One apparatus in a communication system may send a signal to another apparatus or receive a signal from another apparatus. The signal may include information, signaling, data, or the like. The apparatus may alternatively be replaced with a device, an entity, a network entity, a communication device, a communication module, a node, a communication node, or the like. The device is, for example, a terminal device, a network device, or the like.

A terminal device in embodiments of this application includes various devices having a wireless communication function, and the terminal device may be configured to be connected to a person, an object, a machine, and the like. The terminal device may be widely applied in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, a smart wearable, smart transportation, a smart city drone, a robot, remote sensing, passive sensing, positioning, navigation and tracking, autonomous delivery, and the like. The terminal device may be a terminal in any one of the foregoing scenarios, for example, an MTC terminal, an IoT terminal, or the like. The terminal device may be user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, an in-vehicle device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, an airplane, or the like), a ship, a remote control device, a smart home device, or an industrial device; may be an apparatus built in the foregoing device (for example, a communication module, a modem, a chip, or the like in the foregoing device); or may be another processing device connected to the wireless modem.

It should be understood that, in some scenarios, the terminal device may alternatively serve as a base station. For example, the terminal device may serve as a scheduling entity that provides a sidelink signal between terminal devices in a V2X scenario, a D2D scenario, a P2P scenario, or the like.

In embodiments of this application, an apparatus configured to implement a function of the terminal device, namely, a terminal apparatus, may be a terminal device, or may be an apparatus that can support the terminal device in implementing the function, for example, a chip system or a chip, where the apparatus may be installed in the terminal device. In embodiments of this application, the chip system may include a chip, or may include a chip and another discrete device.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that has a base station function in D2D, V2X, and M2M communication, a network side device in a 6G network, a device that has a base station function in a future communication system, or the like. The base station may support networks of a same access technology or different access technologies. Neither of a specific technology and a specific device form used by the network device is not limited in embodiments of this application.

The base station may be fixed, or may be mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU, or a DU, or a CU and a DU, or a device including a control plane CU (a central unit-control plane (central unit-control plane, CU-CP)) node, a user plane CU (a central unit-user plane (central unit-user plane, CU-UP)) node, and a DU node.

In some deployments, a plurality of RAN nodes cooperate to assist a terminal in implementing radio access, and different RAN nodes each implement some functions of the base station. For example, the RAN node may be a CU, a DU, a CU-CP, a CU-UP, a radio unit (radio unit, RU), or the like. The CU and the DU may be separately disposed, or may be included in a same network element, for example, a BBU. The RU may be included in a radio frequency device or a radio unit, for example, included in an RRU, an AAU, or an RRH.

In different systems, the CU (or the CU-CP and the CU-UP), the DU, or the RU may alternatively have different names, but a person skilled in the art can understand meanings thereof. For example, the radio access network may alternatively be an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open (open CU-CP, O-CU-CP), the CU-UP may also be referred to as an open (open CU-UP, O-CU-UP), and the RU may also be referred to as an open RU (open RU, O-RU). Any one of the CU (or the CU-CP or the CU-UP), the DU, and the RU in this application may be implemented by a software module, a hardware module, or a combination of a software module and a hardware module.

In embodiments of this application, an apparatus configured to implement a function of the network device may be a network device, or may be an apparatus that can support the network device in implementing the function, for example, a chip system or a chip, where the apparatus may be installed in the network device. In embodiments of this application, the chip system may include a chip, or may include a chip and another discrete device.

The network device and the terminal device may be deployed on land, including an indoor or outdoor device, a handheld device, or an in-vehicle device; may be deployed on a water surface; or may be deployed on an airplane, a balloon, and a satellite in air. A scenario in which the network device and the terminal device are located is not limited in embodiments of this application.

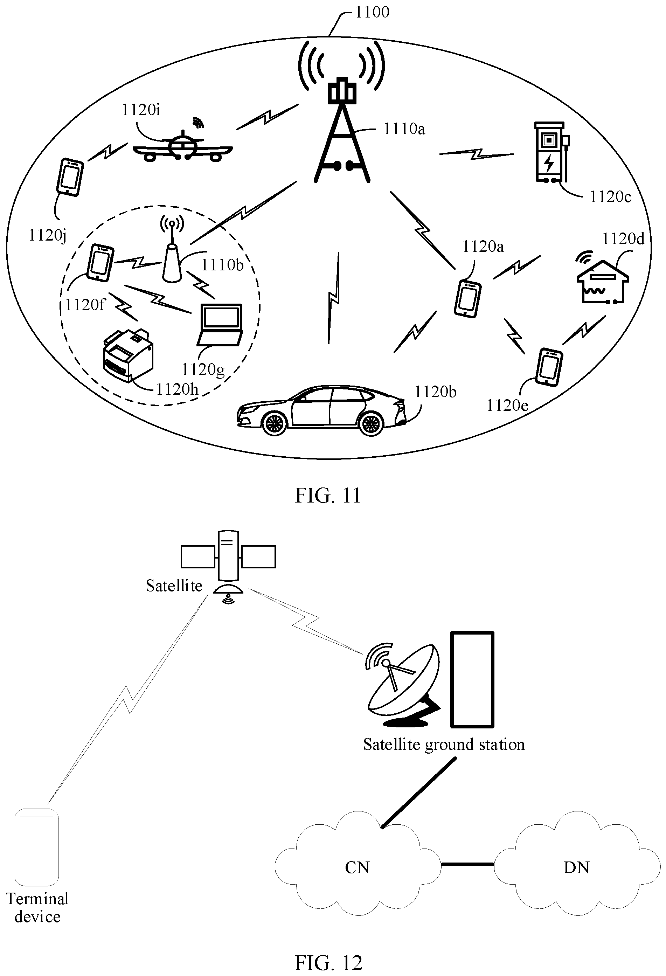

With reference to communication systems shown in FIG. 11 to FIG. 16, the following describes, by using an example, communication systems to which embodiments of this application are applicable.

FIG. 11 is a diagram of a communication system to which an embodiment of this application is applicable. As shown in FIG. 11, the wireless communication system includes a radio access network 1100. The radio access network 1100 may be a next-generation (for example, 6G or a higher version) radio access network, or a conventional (for example, 5G, 4G, 3G, or 2G) radio access network. One or more terminal devices (1120a to 1120j, which are collectively referred to as 1120) may be interconnected or connected to one or more network devices (1110a and 1110b, which are collectively referred to as 1110) in the radio access network 1100. Network elements in the wireless communication system are connected to each other through an interface (for example, NG or Xn) or an air interface. Any terminal device in FIG. 11 may be used as an example of the second communication apparatus, and any one of one or more network devices in FIG. 11 may be used as an example of the first communication apparatus. Alternatively, one terminal device in FIG. 11 may be used as an example of the first communication apparatus, and another terminal device in FIG. 11 may be used as an example of the second communication apparatus.

FIG. 11 is merely a diagram. The wireless communication system may further include another device, for example, may further include a core network device, a wireless relay device, and/or a wireless backhaul device, which are not shown in FIG. 11.

The following describes a satellite system to which embodiments of this application are applicable. According to a communication mode of a satellite, the satellite system may have a transparent (transparent) mode and a regenerative (regenerative) mode. The transparent mode may also be referred to as a transparent forwarding mode. In the transparent mode, the satellite may also be referred to as a satellite base station or the like. The satellite is configured to: convert a frequency and forward a signal, where the signal is generated and sent by a satellite ground station. In the regenerative mode, the satellite may carry (or be coupled to) a base station or a DU in the base station. The satellite can parse and process a signal received from the ground, and send a processed signal to the terminal device, to implement signal regeneration.

FIG. 12 is a diagram of a satellite communication system in a transparent mode, to which an embodiment of this application is applicable. In FIG. 12, a satellite and/or a satellite ground station may be used as an example of the first communication apparatus, and one of terminal devices may be used as an example of the second communication apparatus.

The satellite may access a network according to a non-3GPP radio protocol (non-3GPP radio protocol), or the satellite may access a network according to a 3GPP radio protocol. A communication connection is established between the terminal device and the satellite and between the satellite and the satellite ground station through a non-3GPP radio protocol interface. The satellite ground station may include an access point. The satellite ground station may communicate with a CN through an NG interface (for example, an N2 interface, an N3 interface, or the like), and the CN communicates with a data network (data network, DN) through an N6 interface. A link between the ground station and the satellite is referred to as a feeder link (feeder link), and a link between the satellite and the terminal device is referred to as a service link (service link).

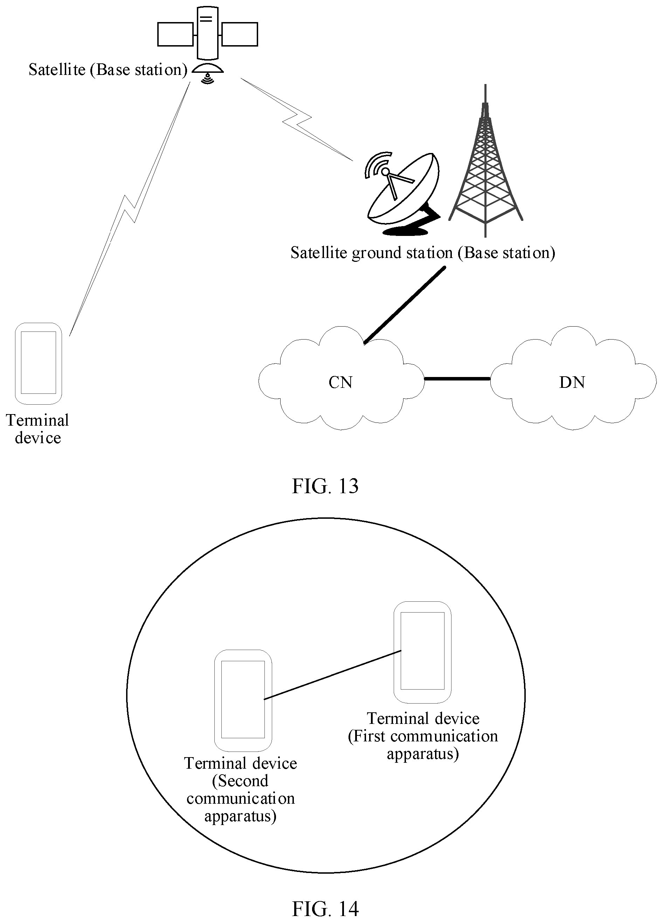

FIG. 13 is a diagram of a satellite communication system in a regenerative mode, to which an embodiment of this application is applicable. In FIG. 13, a satellite and/or a satellite ground station may be used as an example of the first communication apparatus, and one of terminal devices may be used as an example of the second communication apparatus.

As shown in FIG. 13, the satellite carries a base station, and the satellite ground station carries a base station. A communication connection may be established between the terminal device and the satellite through a Uu interface, and a communication connection may be established between the satellite and the satellite ground station through an Xn interface. Interfaces between the satellite ground station, a CN, and a DN are the same as those in FIG. 12. For same content, refer to each other. Details are not described herein again. Optionally, the satellite ground station may alternatively be a gateway of the satellite, and does not include a base station.

The satellite ground station in the satellite system shown in FIG. 12 or FIG. 13 may be configured to connect the satellite to a network. The satellite ground station may also be referred to as a gateway (gateway), a ground station, an earth station, or the like. In addition, the satellite system shown in FIG. 12 or FIG. 13 does not constitute a limitation on a communication system to which embodiments of this application are applicable. Moreover, names of devices in the satellite system are not limited in FIG. 12 or FIG. 13. For example, in different communication scenarios, the satellite ground station, the satellite, or the like may alternatively have another name. Furthermore, the satellite in embodiments of this application may alternatively be replaced with another non-terrestrial network device, for example, a device such as a high-altitude platform device, a high-altitude aircraft, or the like. This is not limited in embodiments of this application.

FIG. 14 shows a communication system to which an embodiment of this application is applicable. FIG. 14 is, for example, a diagram of an SL communication scenario. In FIG. 14, two terminal devices may communicate with each other, and one terminal device may configure a spreading length and the like for the other terminal device. One terminal device in FIG. 14 may be used as an example of the first communication apparatus, and the other terminal device may be used as an example of the second communication apparatus.

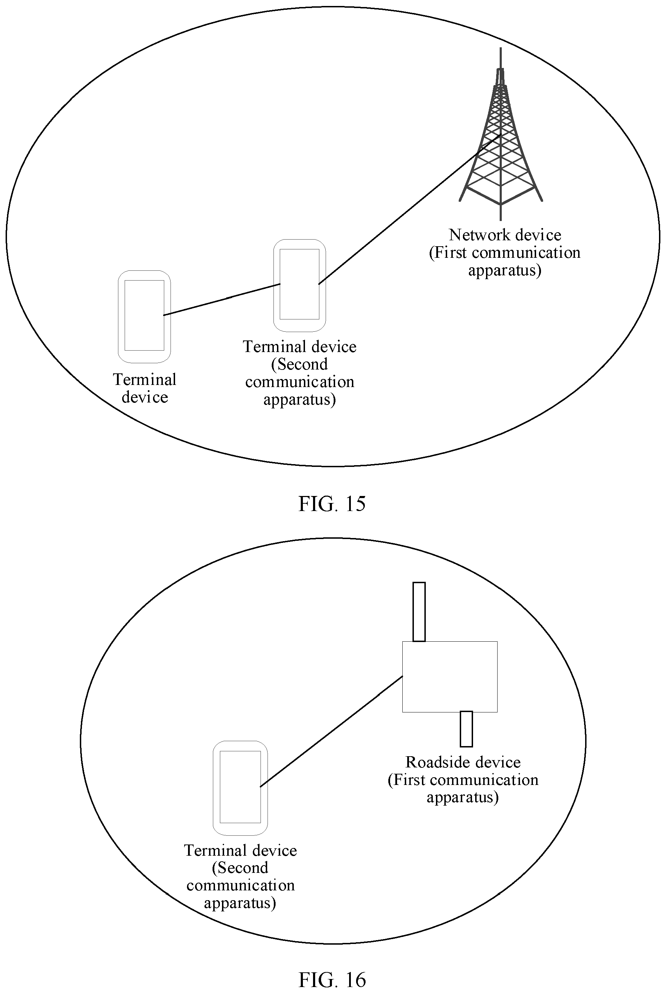

FIG. 15 shows a communication system to which an embodiment of this application is applicable. FIG. 15 shows a network device and a plurality of terminal devices. The network device may configure a spreading length for one of the plurality of terminal devices, and the terminal device may communicate with another terminal device by using the spreading length. The another terminal device may be located within a coverage area of the first communication apparatus (for example, the network device), or may be located outside a coverage area of the first communication apparatus (for example, the network device), in other words, is not located within the coverage area of the first communication apparatus (for example, the network device). This is not specifically limited herein. The network device in FIG. 15 may be used as an example of the first communication apparatus, and one of the plurality of terminal devices may be used as an example of the second communication apparatus.

FIG. 16 is a diagram of a communication system to which an embodiment of this application is applicable. FIG. 16 shows a roadside device and a terminal device. The roadside device may indicate a spreading length for the terminal device. The roadside device in FIG. 16 may be an example of the first communication apparatus, and the terminal device in FIG. 16 may be used as an example of the second communication apparatus.

In FIG. 11 to FIG. 16, the communication systems to which embodiments of this application are applicable are described by using examples. Actually, the communication systems to which embodiments of this application are applicable are not limited.

The following describes, with reference to accompanying drawings, methods provided in embodiments of this application.

In the accompanying drawings corresponding to embodiments of this application, steps represented by dashed lines are all optional steps. The first communication apparatus in embodiments of this application is, for example, any network device in FIG. 11, any terminal device in FIG. 11, the satellite and/or the satellite ground station in FIG. 12, the satellite and/or the satellite ground station in FIG. 13, the terminal device in FIG. 14, the network device in FIG. 15, or the roadside device in FIG. 16. The second communication apparatus in embodiments of this application is, for example, any terminal device in FIG. 11 to FIG. 16. If the technical solutions provided in embodiments of this application are applied to another communication system, names and/or functions of apparatuses may be changed. This is not limited herein.

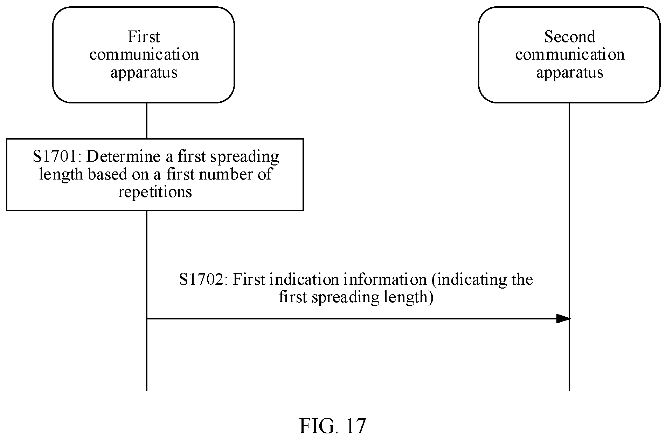

FIG. 17 shows a communication method according to an embodiment of this application. The following describes steps shown in FIG. 17.

S1701: A first communication apparatus determines a first spreading length based on a first number of repetitions.

For content of the first number of repetitions, refer to the content of the number of repetitions described above. Repeated content is not listed herein again. For content of the first spreading length, refer to the content of the spreading length described above. The first number of repetitions and the first spreading length may be used by the first communication apparatus (for example, a network device, a terminal device, or the like) to process and send a first signal. Alternatively, the first number of repetitions and the first spreading length may be used by the first communication apparatus to obtain a first signal, may be used by another communication apparatus (for example, a second communication apparatus, specifically, a terminal device or a network device) to process and send a first signal, or may be used by another communication apparatus (for example, a second communication apparatus) to obtain a first signal, or the like. This is not specifically limited herein. The first spreading length in embodiments of this application indicates a length for performing spreading processing on the first signal. There may be a plurality of types of spreading processing for the first information, for example, time-domain spreading, frequency-domain spreading, time-frequency spreading, or other spreading. For example, the spreading type is specifically any spreading type shown in Table 1. This is not limited herein. That the first communication apparatus determines the first spreading length based on the first number of repetitions may alternatively be stated or understood as that the first spreading length is associated with the first number of repetitions or the first number of repetitions is related to the first spreading length. The following first describes a manner in which the first communication apparatus obtains the first number of repetitions.

The first communication apparatus may be configured, preconfigured, or predefined with the first number of repetitions by using signaling, for example, is preconfigured with the first number of repetitions according to a protocol. Alternatively, the first communication apparatus pre-stores the first number of repetitions. For example, the first communication apparatus obtains the first number of repetitions from another apparatus, and pre-stores the first number of repetitions. Alternatively, the first communication apparatus may be configured, preconfigured, or predefined with a plurality of numbers of repetitions by using signaling. For example, the first communication apparatus may be configured with a plurality of numbers of repetitions according to a protocol. The first communication apparatus may determine one number of repetitions from the plurality of numbers of repetitions as the first number of repetitions.

The first communication apparatus may randomly determine one number of repetitions from a plurality of numbers of repetitions as the first number of repetitions. Alternatively, the first communication apparatus may determine the first number of repetitions from at least one number of repetitions based on signal quality of a communication link. For example, better signal quality of the link indicates a smaller first number of repetitions; and conversely, poorer signal quality of the link indicates a larger first number of repetitions. In this way, when transmission effects are ensured, excessive resources occupied by repeated transmission can be minimized. Alternatively, the first communication apparatus may determine the first number of repetitions from at least one number of repetitions based on a quantity of remaining resources of the first communication apparatus or the second communication apparatus. Optionally, a larger quantity of remaining resources indicates a larger first number of repetitions, or a smaller quantity of remaining resources indicates a smaller first number of repetitions. In this way, a case in which resources of a communication system are insufficient to support repeated transmission can be avoided. Certainly, the first communication apparatus may determine the first number of repetitions in a plurality of manners. This is not specifically limited herein.

Optionally, any number of repetitions may be in units of a second-type time-domain unit, for example, a slot or a symbol. The any number of repetitions is, for example, any number of repetitions that is configured, preconfigured, or predefined by using signaling, for example, is the first number of repetitions or the plurality of numbers of repetitions. Optionally, a unit size of the any number of repetitions may be the same as or different from a unit size of the first spreading length (that is, a first-type time-domain unit).

For example, the first spreading length is in units of a symbol, and the any number of repetitions is also in units of a symbol. For another example, the first spreading length is in units of a symbol, and the any number of repetitions is also in units of a slot.

Optionally, if the unit size of the any number of repetitions is different from the unit size of the first spreading length, the first communication apparatus may convert the unit size of the any number of repetitions, to cause the unit size corresponding to the any number of repetitions to be the same as the unit size of the first spreading length. Certainly, there are a plurality of conversion manners. This is not specifically limited herein.

For example, if the any number of repetitions is in units of a slot, and the first spreading length is in units of a symbol, the unit size of the any number of repetitions may be converted into the unit size of the first spreading length.

In an example, *Nᵣₑₚ* = *M*₁ · *N*₁/*M*₂. *M*₁ represents a quantity of symbols that can be used for transmitting the first signal and that are in one slot, *N*₁ represents the any number of repetitions, the any number of repetitions is in units of a slot, and *M*₁ represents a quantity of symbols corresponding to one element in the first spreading length.

For example, if *N*₁ = 1, *M*₁ = 12, and *M*₂ = 3, *Nᵣₑₚ* = 12 _{*} 1/3 = 4. To be specific, a total quantity of resources that can be used for spectrum spreading in repetition and that are in one slot is 4. In this case, the first spreading length is, for example, 4.

Alternatively, if *N*₁ = 8, *M₁* = 12, and *M*₂ = 6, *Nᵣₑₚ* = 12 _{*} 8/6 = 24. To be specific, a total quantity of resources that can be used for spectrum spreading in repetition and that are in eight slots is 24.

Alternatively, if *N*₁ = 16, *M*₁ = 12, and *M*₂ = *12, Nᵣₑₚ* = 12 _{*} 16/12 = 16. To be specific, spectrum spreading is performed in units of a slot, and a total quantity of resources that can be used for spectrum spreading in repetition and that are in 16 slots is 16. In this case, the first spreading length is, for example, 4.

The following describes a manner in which the first communication apparatus determines the first spreading length based on the first number of repetitions.

Manner 1: The first communication apparatus determines the first spreading length from a first association relationship (which may alternatively be referred to as a first correspondence) based on the first number of repetitions.

The first association relationship may be obtained by the first communication apparatus from another apparatus, or may be preconfigured or predefined. For example, the first association relationship is defined in a formula, a table, or a text specification that is preconfigured in a protocol or that is defined in a protocol. This is not specifically limited in this application. The first association relationship may be in a form of a table, an array, or a formula, in another form, or the like. This is not specifically limited herein. The first association relationship indicates at least one spreading length corresponding to at least one number of repetitions. The at least one number of repetitions includes the first number of repetitions, and the at least one spreading length includes the first spreading length. In this way, the first communication apparatus may determine, from the first association relationship based on the first number of repetitions, the first spreading length corresponding to the first number of repetitions.

In a possible design, the first association relationship includes at least one number of repetitions and one spreading length corresponding to each of the at least one number of repetitions. In other words, one number of repetitions corresponds to one spreading length. In this way, the first communication apparatus may determine, from the first association relationship based on the first number of repetitions, the first spreading length corresponding to the first number of repetitions.

Refer to the following Table 2. Table 2 shows an example of the first association relationship provided in this embodiment of this application.

**Table 2**

| | | | | | | | | |
|---|---|---|---|---|---|---|---|---|
| Nᵣₑₚ | 32 | 24 | 20 | 16 | 8 | 4 | 2 | 1 |
| N_{SF} | 24 | 20 | 16 | 8 | 4 | 2 | 1 | 1 |

As shown in Table 2, if the first number of repetitions is 32, the first communication apparatus may determine, based on the first association relationship shown in Table 2, that the first spreading length is 32.

In a possible design, the first association relationship includes different values of first indication information, at least one number of repetitions, and one spreading length corresponding to each of the at least one number of repetitions and each of different values of the first indication information. In other words, one value of the first indication information and one number of repetitions are uniquely associated with one spreading length. Alternatively, it is stated as that the spreading length is associated with both the number of repetitions and the value of the first indication information. In this way, the first communication apparatus may determine, from the first association relationship based on the first number of repetitions and one value of the first indication information, the first spreading length corresponding to the first number of repetitions and the value of the first indication information. It may be understood that the first indication information is used for determining (or indicating) the first spreading length.

Refer to the following Table 3. Table 3 shows an example of the first association relationship provided in this embodiment of this application.

**Table 3**

| Value of the first indication information | Nᵣₑₚ = 32 | Nᵣₑₚ = 24 | Nᵣₑₚ = 20 | Nᵣₑₚ = 16 | Nᵣₑₚ = 8 | Nᵣₑₚ = 4 | Nᵣₑₚ = 2 | Nᵣₑₚ = 1 |
|---|---|---|---|---|---|---|---|---|
| 000 | 32 | 24 | 20 | 16 | 8 | 4 | 2 | 1 |
| 001 | 16 | 12 | 10 | 8 | 4 | 2 | 1 | Reserved |
| 010 | 8 | 6 | 5 | 4 | 2 | 1 | Reserved | Reserved |
| 011 | 4 | 5 | 3 | 2 | 1 | Reserved | Reserved | Reserved |
| 100 | 2 | 3 | 2 | 1 | Reserved | Reserved | Reserved | Reserved |
| 101 | 1 | 2 | 1 | Reserved | Reserved | Reserved | Reserved | Reserved |
| 110 | Reserved (reserved) | 1 | Reserved | Reserved | Reserved | Reserved | Reserved | Reserved |
| 111 | Reserved | Reserved | Reserved | Reserved | Reserved | Reserved | Reserved | Reserved |

As shown in Table 3, if the value of the first indication information is 000 and the first number of repetitions is 32, the first communication apparatus may determine, based on the first association relationship shown in Table 3, that the first spreading length is 32. Optionally, in Table 3, the value of the first indication information is merely used as an example. In Table 3, values (in the first column) of the first indication information may alternatively be values in descending order from 111, 110, and other values to 000.

In addition, in an example, optionally, the value of the first indication information may alternatively be of 4 bits, 3 bits, or 2 bits. This is not limited in this application.

Manner 2: The first communication apparatus determines the first spreading length based on a first parameter value and the first number of repetitions. In Manner 2, the first number of repetitions and the first spreading length may also satisfy the first association relationship. This is not limited herein.

For example, the first spreading length is a ratio of the first number of repetitions to the first parameter value, or is a result of rounding a ratio of the first number of repetitions to the first parameter value. A rounding operation may be rounding up or rounding down. A value of the first parameter value may be determined by the first communication apparatus, may be preconfigured or predefined, or may be determined based on the first indication information. This is not limited herein.

For example, the first parameter value *a* = 2*^{k}*, where k represents, for example, the value of the first indication information. For example, k is an integer, and k is, for example, 0, 1, 3, 4, 5, 6, 7, or another value. This is not limited herein. For example, k is specifically a decimal number of the first indication information.

For example, the first spreading length satisfies the following formula (4) or (5). ${N}_{SF} = ceil \left(\frac{{N}_{rep}}{{2}^{k}}\right)$ (4) ${N}_{SF} = floor \left(\frac{{N}_{rep}}{{2}^{k}}\right)$ (5)
ceil represents rounding up, or may be represented as ┌ ┐. floor represents rounding down, or may be represented as └ ┘. *Nᵣₑₚ* prepresents the first number of repetitions.

Optionally, the foregoing formulas (4) and (5) may be represented by the following formula (6). ${N}_{rep} = {M}_{1} ⋅ {N}_{1} / {M}_{2}$ (6)

*M*₁ represents a quantity of symbols that can be used for transmitting the first signal and that are in one slot, *N*₁ represents any number of repetitions, the any number of repetitions is in units of a slot, and *M*₁ represents a quantity of symbols corresponding to one element in spreading processing. *M*₁, *M*₂, and *N*₁ are positive integers.

Alternatively, the first parameter value *a* = k/M. For example, M may represent a quantity of first-type time-domain subunits that are in one first-type time-domain unit and that are used for transmitting the first signal. For example, if the first-type time-domain unit is a slot, M may represent a quantity of symbols that are in one slot and that are used for transmitting the first signal. M is a positive integer, for example, 1, 2, 3, or another value. In this case, the first spreading length is, for example, content shown in the following formula (7). ${N}_{SF} = \frac{{N}_{rep} ∗ M}{k}$ (7)

The first spreading length in Manner 1 may alternatively be determined based on the first parameter value and the first number of repetitions. In other words, a relationship that the first spreading length, the first parameter value, and the first number of repetitions satisfy in Manner 1 may be the same as a relationship that the first spreading length, the first parameter value, and the first number of repetitions satisfy in Manner 2. This is not limited herein.

Certainly, Manner 1 and Manner 2 are examples for describing a manner of determining the first spreading length. Actually, the first spreading length may be determined in a plurality of manners. For example, the first communication apparatus may be preconfigured with the first number of repetitions and the first spreading length. In this case, the first spreading length may still be associated with the first number of repetitions. This is not specifically limited herein.

The first spreading length may be further associated with a first quantity. The first quantity may be a quantity of first-type time-domain subunits that are used for transmitting the first signal and that are in one first-type time-domain unit other than a first-type time-domain subunit that is used for transmitting a demodulation reference signal. The first quantity is related to at least one of: a location for transmitting the demodulation reference signal, a quantity of first-type time-domain subunits for transmitting the demodulation reference signal, or the quantity of first-type time-domain subunits for transmitting the first signal. It may be stated as that the first spreading length is further related to at least one of: the first quantity, the location for transmitting the demodulation reference signal, the quantity of first-type time-domain subunits for transmitting the demodulation reference signal, or the quantity of first-type time-domain subunits for transmitting the first signal.

Optionally, a larger first quantity indicates a larger first spreading length, and a smaller first quantity indicates a smaller first spreading length. For another example, the first spreading length is less than the first quantity.

When there are more first-type time-domain subunits for transmitting the demodulation reference signal, a quantity Ma of symbols that can be used for transmitting the first signal and that are in the first-type time-domain unit is accordingly reduced. In this case, the quantity Ma of symbols that can be used for transmitting the first signal may be a prime number. Optionally, a second spreading length is introduced in this embodiment of this application, which is equivalent to configuring a spreading length pair, to satisfy a requirement for processing the first signal. The first spreading length and the second spreading length may be considered as a spreading length pair, and are jointly used to perform spreading processing on the first signal.

In a possible design, the first communication apparatus may further determine the second spreading length corresponding to the first spreading length. Even, the first communication apparatus may further determine another spreading length, that is, a third spreading length, or the like. A quantity of spreading lengths corresponding to the first signal is not specifically limited herein. For content of the first spreading length and the second spreading length, refer to the content of the first spreading length and the second spreading length described above. Repeated content is not described herein again. Optionally, the first communication apparatus may determine the second spreading length only when determining that the first spreading length is a prime number. Certainly, when the first spreading length is not a prime number, the first communication apparatus may also determine the second spreading length. This is not specifically limited herein.

For example, the first communication apparatus may be preconfigured or predefined with the second spreading length. Alternatively, the first communication apparatus may determine the second spreading length with reference to the manner of determining the first spreading length. Repeated content is not described herein again. Alternatively, the first communication apparatus may determine the second spreading length based on the first spreading length. The following describes a manner of determining the second spreading length based on the first spreading length.

The first communication apparatus may determine the second spreading length based on the first spreading length and a second quantity. In other words, the second spreading length is related to the first spreading length and the second quantity. The second quantity is a quantity of first-type time-domain subunits that are used for transmitting the first signal and that are in one first-type time-domain unit other than a first-type time-domain subunit used for transmitting a demodulation reference signal. Alternatively, the second quantity is a quantity of first-type time-domain subunits that are at a first frequency or a second frequency and that are used for transmitting the first signal, where both the first frequency and the second frequency are used for transmitting the first signal. For content of the first frequency and the second frequency, respectively refer to the content of the first frequency and the second frequency described above. Repeated content is not listed herein again.

For example, the second spreading length is a difference between the second quantity and the first spreading length. Alternatively, the second spreading length is a smaller value between the first spreading length and the second quantity. Alternatively, the first spreading length is a result of rounding an average value of the second quantity and the first spreading length, or the like.

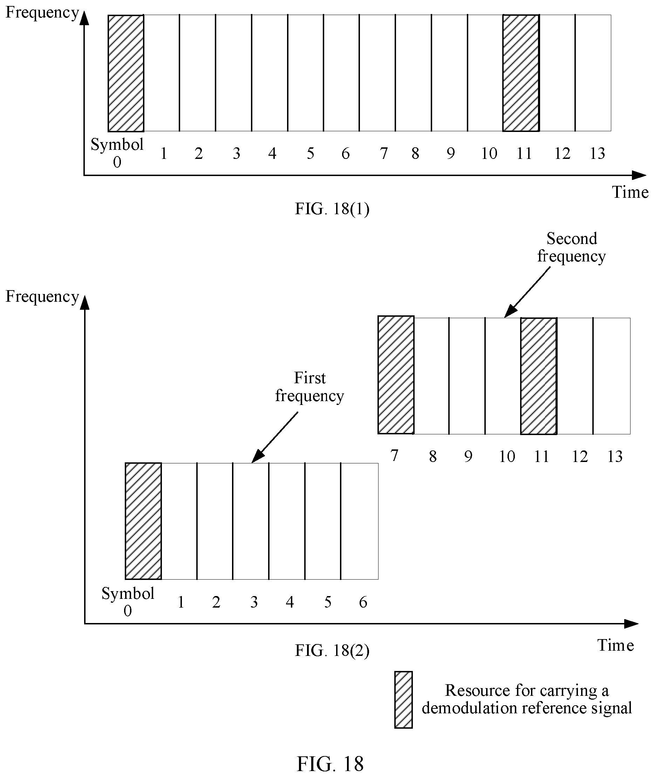

FIG. 18(1) and FIG. 18(2) are diagrams of a second quantity according to an embodiment of this application. In FIG. 18(1) and FIG. 18(2), for example, a first-type time-domain unit is a slot, and a first-type time-domain subunit is a symbol. As shown in FIG. 18(1), the first signal occupies 14 symbols, that is, a symbol 0 to a symbol 13. Two symbols, that is, the symbol 0 and the symbol 11 further carry the demodulation reference signal. In this case, the second quantity is 14 - 2 = 12. If the first spreading length is 4, there may be a pair of configured spectrum spreading factors in this case. The second spreading length may be, for example, 12 - 4 = 8. Alternatively, the second spreading length is min{12, 4} = 4.

As shown in FIG. 18(2), the first signal is transmitted in a frequency hopping manner, and the first signal is transmitted at both the first frequency and the second frequency. The first signal occupies seven symbols, that is, a symbol 0 to a symbol 6, at the first frequency. One symbol, that is, the symbol 0 further carries the demodulation reference signal. In this case, the second quantity corresponding to the first frequency is 7 - 1 = 6. If the first spreading length is 4, the second spreading length may be, for example, 6 - 4 = 2, or min{6, 4} = 4. The first signal occupies seven symbols, that is, a symbol 7 to the symbol 13, at the second frequency. Two symbols, that is, the symbol 7 and the symbol 11 further carry the demodulation reference signal. In this case, the second quantity corresponding to the first frequency is 7 - 2 = 5. If the first spreading length is 4, there may be a pair of configured spectrum spreading factors in this case. The second spreading length may be, for example, 5 - 4 = 1. Alternatively, the second spreading length is min{5, 4} = 4.

For example, the first signal is carried on a PUSCH, the first-type time-domain unit is a slot, and the first-type time-domain subunit is a symbol. If a quantity *l_{d}* of symbols that can be used for transmitting the PUSCH is 14, and a quantity of symbols that are used for transmitting the DMRS is 1, the second quantity Mₐ = 13. In this case, the first spreading length N_{SF} may be one of {1, 2, 11, 6, 7, 5, 8, 4, 9, 3, 10, 13}. Optionally, the second spreading length may be equal to 13 minus the first spreading length. The first spreading length is used for performing spreading processing on the former part of the slot, and the second spreading length is used for performing spreading processing on the latter part of the slot.

For example, if the quantity l_{d} of symbols that can be used for transmitting the PUSCH is 14, and the quantity of symbols that are used for transmitting the DMRS is 1, the second quantity Mₐ = 12. In this case, the first spreading length N_{SF} may be one of {1, 2, 3, 4, 6, 12}. For example, the first spreading length is 12, and 12 is a composite number and has many factors. In this case, there is no requirement for pairing another spreading length. Therefore, it may be unnecessary for the first communication apparatus to determine the second spreading length.

For example, if the quantity l_{d} of symbols that can be used for transmitting the PUSCH is 12, and the quantity of symbols that are used for transmitting the DMRS is 4, the second quantity Mₐ = 8. In this case, the first spreading length N_{SF} may be one of {1, 2, 4, 6, 8}. For example, the first spreading length is 8, and 8 is a composite number and has many factors. In this case, there is no requirement for pairing another spreading length. Therefore, it may be unnecessary for the first communication apparatus to determine the second spreading length.

S1702: The first communication apparatus sends the first indication information to the second communication apparatus. Correspondingly, the second communication apparatus receives the first indication information from the first communication apparatus. The first indication information indicates the first spreading length.

The first indication information is carried in an RRC message, a system message, a radio resource control parameter (which may be briefly referred to as an RRC parameter), an RAR message, or DCI. The radio resource control parameter indicates a common (common) radio resource control parameter of a plurality of communication apparatuses (for example, a plurality of terminal devices). System information is specifically, for example, a system information block (system information block, SIB) For example, when the second communication apparatus initially accesses a network or initially establishes a connection to the first communication apparatus, the first indication information may be carried in the system information, the random access response message, or the radio resource control parameter. The downlink control information may be downlink control information in any format, for example, downlink control information in a format (format) 0 or a format 1. This is not specifically limited herein.

The following describes an example of a manner in which the first indication information indicates the first spreading length.

In a possible implementation, W bits in the first indication information directly carry the first spreading length, where W is a positive integer.

W may be preconfigured or predefined on the first communication apparatus and the second communication apparatus, may be determined by the first communication apparatus and the second communication apparatus through negotiation, or may be configured by the first communication apparatus for the second communication apparatus. For example, if the first spreading length is 16, and a value of W is 5, a value of the W bits is 10000, to be specific, it indicates that the first spreading length is 16.

In this way, after receiving the first indication information, the second communication apparatus may parse the W bits in the first indication information, to determine the first spreading length. In this implementation, the manner of indicating the first spreading length is simple and direct.

In another possible implementation, the first indication information is used for determining the first spreading length from the at least one spreading length corresponding to the first number of repetitions.

For example, the first number of repetitions is associated with the at least one spreading length. After determining the first number of repetitions, the second communication apparatus may determine the first spreading length based on the first indication information and the first number of repetitions. For example, the first number of repetitions is preconfigured or predefined on the second communication apparatus. Alternatively, the first communication apparatus may indicate second indication information to the second communication apparatus. The second indication information indicates the first number of repetitions. The second indication information may be carried in an RRC message, a system message, an RRC parameter, an RAR message, or DCI. The first indication information and the second indication information may be carried in a same message or different messages. This is not specifically limited herein. For example, the first indication information is carried in the DCI, and the second indication information is carried in the RRC message.

For example, the first communication apparatus determines the first spreading length in Manner 1, and the first number of repetitions is associated with only the first spreading length. In this case, the first indication information may indicate only the first number of repetitions. In this way, the second communication apparatus may directly determine the first spreading length based on the first number of repetitions and the first association relationship. The first association relationship may be preconfigured or predefined on the second communication apparatus, for example, may be configured on the second communication apparatus according to a protocol, or may be indicated by the first communication apparatus to the second communication apparatus. This is not limited herein.

Optionally, in addition to the first number of repetitions, the second indication information may further indicate at least one of the following information C1 to C7. The following separately provides descriptions.

### C1: First spreading type

For a meaning of the first spreading type, refer to the content of the first spreading type described above. The first spreading type is, for example, time-domain spreading, frequency-domain spreading, time-frequency spreading, or other spreading.

### C2: First transmission mode

For a meaning of the first transmission mode, refer to the content of the first transmission mode described above. Repeated content is not listed herein again.

### C3: Third quantity

The third quantity is a quantity of first-type time-domain subunits corresponding to each element (or code element) in a first spreading sequence (for example, which may be briefly referred to as duration-for-timeOCC). For example, the third quantity may be an example of R in the foregoing formula (2). For example, the third quantity is at least one of {sym1... sym13, slot1, slot2, ..., slot8}, where sym1 represents one symbol, sym2 represents two symbols, slot1 represents one slot, and slot2 represents two slots.

### C4: Fourth quantity

The fourth quantity is a quantity of first-type frequency-domain subunits corresponding to each element in the first spreading sequence (for example, which may be briefly referred to as duration-for-freqOCC). For example, the third quantity may be an example of R in the foregoing formula (3). For example, the fourth quantity is at least one of {RE1... RE12, RB1, RB2, ..., RB8}, where RE1 represents one subcarrier, RE12 represents 12 physical resource blocks RBs, RB8 represents eight RBs, and the like.

C5: Index (index) of the first spreading sequence corresponding to the first spreading length (for example, which may be briefly referred to as OccIndex)

The index of the first spreading sequence is, for example, at least one of {1, 2, ...,}.

### C6: Comb size (comb size), for example, which may be represented as N_{comb}

The comb size indicates a spacing for mapping the first signal in a frequency-domain direction. The comb size is, for example, at least one of {1, 2, ...,}. For example, if the comb size is three REs, it indicates that the first signal is mapped at a spacing of three REs in the frequency-domain direction.

### C7: Comb offset (offset) value (or offset)

The comb offset value indicates an offset in the spacing for mapping the first signal in the frequency-domain direction. The comb offset value is at least one of {0, 2, ..., *N_{comb}* -1}. For example, if the comb size is three REs, the comb offset value is any one of 0, 1, and 2.

Certainly, the second indication information may further indicate other information. This is not specifically limited herein. Optionally, content of the second indication information may be carried in a TDRA list. For example, the first number of repetitions indicated by the second indication information and at least one of the foregoing information C1 to C7 indicated by the second indication information may be carried in the TDRA list. This is not specifically limited herein.

Optionally, the first indication information may indicate at least one of the foregoing information C1 to C7. This is not specifically limited herein.

Alternatively, the first communication apparatus determines the first spreading length in Manner 1, and the first number of repetitions is associated with a plurality of spreading lengths. In this case, the first communication apparatus may determine the value of the first indication information based on the first number of repetitions. The value of the first indication information indicates the first spreading length. In this way, the second communication apparatus may determine the first spreading length based on the first number of repetitions, the value of the first indication information, and the first association relationship. For example, the first association relationship is the first association relationship shown in Table 3, the value of the first indication information is 001, and a first repetition factor is 24. In this case, the second communication apparatus may determine, based on the first association relationship shown in Table 3, that the first spreading length is 12. For another example, the first indication information indicates an index of the first spreading length. In this way, the second communication apparatus may determine, based on the index of the first spreading length, the first spreading length from the at least one spreading length corresponding to the first number of repetitions. For example, the first number of repetitions is associated with three spreading lengths (indexes of the three spreading lengths are 1, 2, and 3), and the first indication information indicates that the index of the first spreading length is 2. In this case, the second communication apparatus may determine the first spreading length based on the first number of repetitions and the index of the first spreading length.

Alternatively, the first communication apparatus determines the first spreading length in Manner 2. In this case, the second communication apparatus may determine the first parameter value based on the value of the first indication information, and determine the first spreading length based on the first parameter value and the first number of repetitions. This is equivalent to that the first indication information indicates the first spreading length. For example, the second communication apparatus may determine the first spreading length according to any one of the foregoing formulas (4) to (7). This is not limited herein.

Optionally, when the first spreading length may be further related to the first quantity, the second communication apparatus may further determine a value range of the first spreading length or determine the first spreading length or the like based on the first quantity. For content of the first quantity, refer to the content of the first quantity described above.

Optionally, in addition to the first spreading length, the second communication apparatus may further determine the second spreading length. Even, the second communication apparatus may further determine another spreading length, that is, a third spreading length, or the like. Optionally, the second communication apparatus may determine the second spreading length only when determining that the first spreading length is a prime number. Certainly, when the first spreading length is not a prime number, the second communication apparatus may also determine the second spreading length. This is not specifically limited herein.

For example, the second communication apparatus may be preconfigured or predefined with the second spreading length. Alternatively, the second communication apparatus may determine the second spreading length with reference to the manner of determining the first spreading length. Repeated content is not described herein again. Alternatively, the second communication apparatus may determine the second spreading length based on the first spreading length.

The second communication apparatus may determine the second spreading length based on the first spreading length and the second quantity. In other words, the second spreading length is related to the first spreading length and the second quantity. For content of the second quantity, refer to the content of the second quantity described above. Details are not listed herein again. The second quantity may be indicated by the first communication apparatus to the second communication apparatus, may be determined by the first communication apparatus and the second communication apparatus through negotiation, or may be determined by the second communication apparatus. This is not specifically limited herein. For a specific manner in which the second communication apparatus determines the second spreading length based on the first spreading length and the second quantity, refer to the content of determining the second spreading length by the first communication apparatus. Repeated content is not listed herein again.

In a possible design, in addition to the first spreading length, the first communication apparatus may further indicate, to the second communication apparatus, the first spreading sequence corresponding to the first spreading length.

The first communication apparatus may further send third indication information to the second communication apparatus. Correspondingly, the second communication apparatus receives the third indication information from the first communication apparatus. The first communication apparatus may send the first indication information and the third indication information in any sequence. For example, the first communication apparatus first sends the first indication information and then sends the third indication information, the first communication apparatus first sends the third indication information and then sends the first indication information, or the first communication apparatus synchronously sends the first indication information and the third indication information. The third indication information indicates the index of the first spreading sequence corresponding to the first spreading length. Alternatively, it may be stated as that the third indication information indicates the first spreading sequence. The index of the first spreading sequence is, for example, {0, 1, ..., 15}. The following describes a quantity of bits required for the third indication information to indicate the index of the first spreading sequence.

N bits in the third indication information indicate the index of the first spreading sequence, where N is a positive integer. N may be a fixed value, or N may be flexible and variable. This is not limited herein. N may be understood as the quantity of bits that are in the third indication information and that indicate the index of the first spreading sequence. When N is flexible and variable, it can be ensured that bit overheads are reduced when the index of the first spreading sequence is indicated, and flexibility of indicating the index of the first spreading sequence can also be improved.

Optionally, a maximum value of N is a first value, and the first value is, for example, 5, *ceil*(*log*₂(*N_{SF}*)), or *ceil*(*log*₂(*Nᵣₑₚ*)). *N_{SF}* represents the first spreading length, and *Nᵣₑₚ* represents the first number of repetitions. A length of the spectrum spreading sequence may be less than, equal to, or greater than 2^{N}. This is not limited herein.

For example, a value of N is related to the first spreading length. Alternatively, it may be stated as that a value of N may be determined based on the first spreading length. For the value of N, refer to the following formula (8), (9), or (10). $N = ceil \left({log}_{2}\left({N}_{SF}\right)\right)$ (8) $N = floor \left({log}_{2}\left({N}_{SF}\right)\right)$ (9) $N = {log}_{2} \left({N}_{SF}\right)$ (10)

*N_{SF}* represents the first spreading length. For content of *ceil* and *floor*, refer to the content of *ceil* and *floor* described above.

For example, the first indication information indicates that the first spreading length is 4. In this case, according to any one of the foregoing formulas (8) to (10), two bits in the third indication information indicate the index of the first spreading sequence. Alternatively, the first indication information indicates that the first spreading length is 5. In this case, according to the foregoing formula (8), three bits in the third indication information indicate the index of the first spreading sequence.

The following describes a manner in which the third indication information indicates the index of the first spreading sequence.

In a possible implementation, the third indication information includes a number of the first spreading sequence. The number of the first spreading sequence is used for determining the index of the first spreading sequence from an index set. The index set includes an index of a part or all of spreading sequences corresponding to the first spreading length. In this way, the third indication information may indicate indexes corresponding to a part of spreading sequences corresponding to the first spreading length. This can help reduce interference between different code division users, and improve communication quality of the communication system. Optionally, the index set may be configured by a network. Optionally, the third indication information may be indicated by RRC signaling or DCI signaling.

For example, the first spreading length may correspond to one or more spreading sequences, and indexes of all or a part of the one or more spreading sequences constitute an index set. The third indication information may indicate a number of the first spreading sequence in the index set. The number may be a relative index, a sequence number, or the like of the first spreading sequence in the index set. This is not specifically limited herein.

For example, the first communication apparatus may be configured with a spreading sequence list corresponding to the first spreading length. Indexes of spreading sequences in the spreading sequence list constitute an index set, and the spreading sequence list includes a part or all of spreading sequences available for the first spreading length. The third indication information may indicate at least one spreading sequence (that is, the first spreading sequence) in the spreading sequence list.

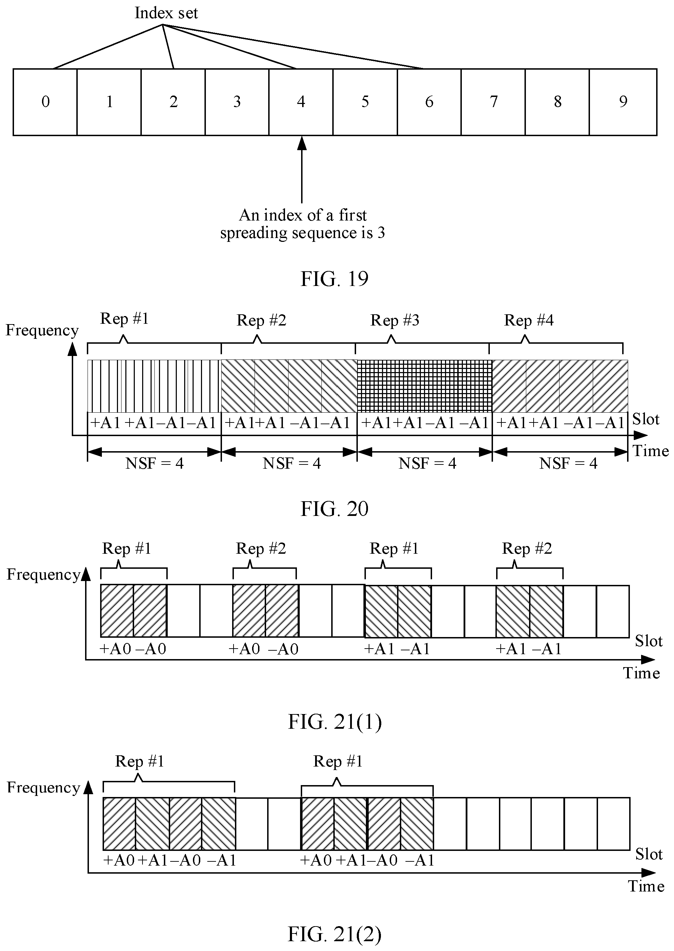

For example, FIG. 19 is a diagram of indicating the index of the first spreading length according to an embodiment of this application. As shown in FIG. 19, the first spreading length is 10, there are 10 spreading sequences corresponding to the first spreading length, and indexes of the 10 spreading sequences are 0, 1, 2, 3, 4, 5, 6, 7, 8, and 9. The index set may include indexes of four spectrum spreading sequences, for example, {0, 2, 4, 6}, or {1, 3, 5, 7}. The third indication information may indicate that the first spreading length is {0, 2, 4, 6}, that is, the index set includes {0, 2, 4, 6}. If the third indication information indicates that the index of the first spreading sequence is 3, it indicates that the first spreading sequence is a spreading sequence whose index is 4.

In another possible implementation, the third indication information indicates a sequence index and/or a second parameter value. The sequence index and the second parameter value are used for determining the index of the first spreading sequence. The sequence index may be an index of a spreading sequence, or may be only an index that can be used as a reference. This is not limited herein. Certainly, when the third indication information indicates only one of the sequence index and the second parameter value, the other one of the sequence index and the second parameter value may be preconfigured or predefined on the second communication apparatus, for example, preconfigured according to a protocol. This is not specifically limited herein. There may be one or more reference indexes, and there may also be one or more second parameter values. This is not limited herein.

In a first possible design, the index of the first spreading sequence is a sum of the sequence index and the second parameter value. In this case, for the index of the first spreading sequence, refer to content in the following formula (11). ${i}_{a} = i + Δ$ (11)
*iₐ* represents the index of the first spreading length, *i* represents the reference index, and Δ represents an example of the second parameter value.

For example, the first spreading length is 8. In this case, two bits in the third indication information may indicate indexes of four spectrum spreading sequences. Specifically, if the second parameter value Δ is 2, sequence indexes indicated by the third indication information are 0, 1, 2, and 3. In this case, the second communication apparatus may determine, according to the foregoing formula (8), that indexes of the first spreading sequence are {2, 3, 4, 5}.

In a second possible design, the index of the first spreading sequence is a modulo result of dividing a sum of the sequence index and the second parameter value by the first spreading length. In this case, for the index of the first spreading sequence, refer to content in the following formula (12). ${i}_{a} = \left(i+Δ\right) mod {N}_{SF}$ (12)
*iₐ* represents the index of the first spreading length, *i* represents the reference index, Δ represents an example of the second parameter value, mod represents a modulo operation, and *N_{SF}* represents the first spreading length.

For example, the first spreading length is 8. In this case, two bits in the third indication information may indicate indexes of four spectrum spreading sequences. Specifically, if the second parameter value Δ is 2, sequence indexes indicated by the third indication information are {0, 1, 2, 3}, and indexes of the first spreading sequence are {2, 4, 6, 0}.

In a third possible design, the index of the first spreading sequence is a result of dividing a product of the sequence index and the first spreading length by the second parameter value. For example, the index of the first spreading sequence is a positive result of dividing the product of the sequence index and the first spreading length by the second parameter value. In this case, for the index of the first spreading sequence, refer to content in the following formula (13). $\left\{\begin{matrix}{i}_{a} = floor \left(i⋅\frac{{N}_{SF}}{α}\right) , where α \geq 1 \\ {i}_{a} = floor \left(i⋅{N}_{SF}⋅α\right) , where α < 1\end{matrix}\right.$ (13)
*iₐ* represents the index of the first spreading length, *i* represents the reference index, *α* represents an example of the second parameter value, and *N_{SF}* represents the first spreading length. For content of floor, refer to the content of floor described above.

For example, the first spreading length is 8. In this case, two bits in the third indication information may indicate indexes of four spectrum spreading sequences. Specifically, if the second parameter value *α* is 2, sequence indexes indicated by the third indication information are {0, 1, 2, 3}, and the index of the first spreading sequence is {0, 2, 4, 6}.

In the foregoing possible implementation, the third indication information can flexibly indicate the index of the first spreading sequence. This can further reduce a quantity of bits that are in the third indication information and that are occupied by the index of the first spreading sequence.

The first possible design to the third possible design are applicable to a case in which N fixed bits in the third indication information indicate the index of the first spreading sequence, or applicable to a case in which N flexible bits in the third information indicate the index of the first spreading sequence. This is not specifically limited herein.

The third indication information may also be carried in an RRC message, a system message, an RRC parameter, an RAR message, DCI, or the like. The third indication information and the second indication information may be carried in a same message or different messages. This is not specifically limited herein. The third indication information and the first indication information may be carried in a same message, for example, both are carried in DCI, or carried in different messages. This is not specifically limited herein. The third indication information, the second indication information, and the first indication information may be all carried in a same message or different messages. This is not specifically limited herein. For example, both the first indication information and the third indication information are carried in DCI, and the second indication information is carried in RRC.

Optionally, in addition to the index of the first spreading sequence, the third indication information may further indicate an index of a second spreading sequence corresponding to the second spreading length. For a manner of indicating the index of the second spreading sequence, refer to the content of indicating the index of the first spreading sequence. Repeated content is not listed herein again. In addition, the third indication information may further indicate an index of a frequency domain within a comb. For example, U bits in the third indication information may indicate the index of the frequency domain within the comb. U is, for example, *ceil*(*log*₂(*N_{comb}*)). *N_{comb}* represents the comb size.

After the manner in which the first communication apparatus indicates the first spreading length or the like to the second communication apparatus, in a possible implementation, the first communication apparatus performs N_{SF}-fold spreading processing on the first signal to obtain a spread first signal, repeats the spread first signal Nᵣₑₚ times to obtain a second signal, and sends the second signal to the second communication apparatus (or another communication apparatus). In other words, the first communication apparatus may serve as a transmit end of the second signal. In this embodiment of this application, for example, the first communication apparatus sends the second signal to the second communication apparatus. In this case, the second communication apparatus receives the second signal from the first communication apparatus correspondingly.

For example, when the transmission mode of the first signal is transmission in a single first-type time-domain unit, the first communication apparatus may perform N_{SF}-fold spreading processing on the first signal, and then repeat, Nᵣₑₚ times, the first signal on which spreading processing has been performed. This is equivalent to repeating the signal in the single first-type time-domain unit. Alternatively, the first communication apparatus may perform N_{SF} -fold spreading processing on signals (including the first signal) in a plurality of first-type time-domain units, and then entirely repeat, Nᵣₑₚ times, the signals on which N_{SF}-fold spreading processing has been performed. This is equivalent to repeating the signals in the plurality of first-type time-domain units.

For a specific manner (or type) of performing N_{SF}-fold spreading processing on the first signal, refer to the content of the spreading processing type described above. Repeated content is not described herein again. When the first signal is transmitted in a frequency hopping transmission mode and the first spreading length is used for time-domain spreading, the second communication apparatus may perform, by using the first spreading length, spreading processing on the first signal in K1 first-type time-domain units corresponding to the first frequency, to obtain a signal at the first frequency; and/or the second communication apparatus may process, by using the first spreading length, the first signal in K2 first-type time-domain units corresponding to the second frequency, to obtain a signal at the second frequency. In this way, the first signal on which spreading processing has been performed, that is, the signal at the first frequency and/or the signal at the second frequency, can be obtained.

FIG. 20 is a diagram of carrying a signal according to an embodiment of this application. In FIG. 20, slot spreading is used as example. For example, both the first-type time-domain unit and the second-type time-domain unit are slots, the first signal includes A1, both the first spreading length and the first number of repetitions are 4, and the first spreading sequence is [+1 +1 -1 -1]. As shown in FIG. 20, the first communication apparatus may perform 4-fold spreading processing on the first signal in time domain to obtain spread signals (for example, which are represented as +A1, +A1, -A1, and -A1), and then repeatedly transmit the spread signals. For example, as shown in FIG. 17, a 1^{st} repeated transmission (that is, rep #1), a 2^{nd} repeated transmission (that is, rep #2), a 3^{rd} repeated transmission (that is, rep #3), and a 4^{th} repeated transmission (that is, rep #4) are performed. As shown in FIG. 20, +A1, +A1, -A1, -A1, +A1, +A1, -A1, -A1, +A1, +A1, -A1, - A1, +A1, +A1, -A1, and -A1 are carried in 16 slots.

When the transmission mode of the first signal is transmission in a plurality of first-type time-domain units, the first communication apparatus may perform N_{SF} -fold spreading processing on a part of the first signal in a single first-type time-domain signal, and then repeat, Nᵣₑₚ times, the part, on which spreading processing has been performed, of the first signal in the single first-type time-domain unit. This is equivalent to repeating the signal in the single first-type time-domain unit. Alternatively, the first communication apparatus may perform N_{SF} -fold spreading processing on the first signal, and then entirely repeat, Nᵣₑₚ times, the first signal on which N_{SF}-fold spreading processing has been performed. This is equivalent to repeating the signal in the plurality of first-type time-domain units.

FIG. 21(1) and FIG. 21(2) are diagrams of carrying a signal according to an embodiment of this application. In FIG. 21(1) and FIG. 21(2), slot spreading is used as example. For example, both the first-type time-domain unit and the second-type time-domain unit are slots, the first signal is a TBoMS and specifically includes A0 and A1, both the first spreading length and the first number of repetitions are 2, and the first spreading sequence is [+1 -1].

As shown in FIG. 21(1), the first communication apparatus may perform 2-fold spreading processing on a signal (for example, A1) in a single slot in time domain to obtain spread signals (for example, which are represented as +A0 and -A0), and then repeatedly transmit the spread signals. The first communication apparatus may perform 2-fold spreading processing on a signal (for example, A1) in a single slot in time domain to obtain spread signals (for example, which are represented as +A1 and -A1), and then repeatedly transmit the spread signals. For example, as shown in FIG. 21(1), a 1^{st} repeated transmission (that is, rep #1) and a 2^{nd} repeated transmission (that is, rep #2) for A0 are performed, and a 1^{st} repeated transmission (that is, rep #1) and a 2^{nd} repeated transmission (that is, rep #2) for A1 are performed. As shown in FIG. 21(1), +A0, -A0, -, -, +A0, -A0, -, -, +A1, -A1, -, -, +A1, -A1, -, and - are carried in 16 slots. "-" indicates that the first signal is not carried in a slot.

As shown in FIG. 21(2), the first communication apparatus may perform 2-fold spreading processing on signals (for example, A1 and A2) in a plurality of slots in time domain to obtain spread signals (for example, which are represented as +A0, +A1, -A0, and -A1), and then repeatedly transmit the spread signals. For example, as shown in FIG. 21(2), a 1^{st} repeated transmission (that is, rep #1) and a 2^{nd} repeated transmission (that is, rep #2) are performed on +A0, +A1, -A0, and -A1. As shown in FIG. 21(2), +A0, +A1, -A0, -A1, -, -, +A0, +A1, -A0, - A1, -, -, -, -, -, and - are carried in 16 slots. "-" indicates that the first signal is not carried.

Correspondingly, the second communication apparatus may process, based on the first number of repetitions and the first spreading length, the second signal received by the second communication apparatus from the first communication apparatus, to obtain the first signal. For example, the second communication apparatus may determine a signal in one transmission based on the first number of repetitions, and perform de-spreading processing on the signal in the one transmission based on the first spreading length, to obtain the first signal.

In another possible implementation, the second communication apparatus performs N_{SF}-fold spreading processing on the first signal to obtain a spread first signal, repeats the spread first signal Nᵣₑₚ times to obtain a second signal, and sends the second signal to the first communication apparatus (or another communication apparatus, specifically, for example, another terminal device, another network device, or the like). In other words, the second communication apparatus may serve as a transmit end of the second signal. In this embodiment of this application, for example, the second communication apparatus sends the second signal to the first communication apparatus. In this case, the first communication apparatus receives the second signal from the second communication apparatus correspondingly. For content of processing the first signal by the second communication apparatus and content of obtaining the first signal by the first communication apparatus, respectively refer to the content of processing the first signal by the first communication apparatus and the content of obtaining the first signal by the second communication apparatus. Repeated content is not listed herein again.

The content of determining the first spreading length by the first communication apparatus in Manner 1 may be described as an independent embodiment. Optionally, remaining content in the embodiment described in FIG. 17 may be described as an optional manner in this embodiment. For content of this embodiment, refer to the content in the embodiment described in FIG. 17. Details are not listed herein one by one.

The content of determining the first spreading length by the first communication apparatus in Manner 1 and the content of sending the first indication information to indicate the first spreading length may be described as an independent embodiment. Optionally, remaining content in the embodiment described in FIG. 17 may be described as an optional manner in this embodiment. For content of this embodiment, refer to the content in the embodiment described in FIG. 17. Details are not listed herein one by one.

The content in which the first spreading length is related to the first quantity may be described as an independent embodiment. Optionally, remaining content in the embodiment described in FIG. 17 may be described as an optional manner in this embodiment. For content of this embodiment, refer to the content in the embodiment described in FIG. 17. Details are not listed herein one by one.

The content in which the first spreading length is related to the first quantity and the content of sending the first indication information to indicate the first spreading length may be described as an independent embodiment. Optionally, remaining content in the embodiment described in FIG. 17 may be described as an optional manner in this embodiment. For content of this embodiment, refer to the content in the embodiment described in FIG. 17. Details are not listed herein one by one.

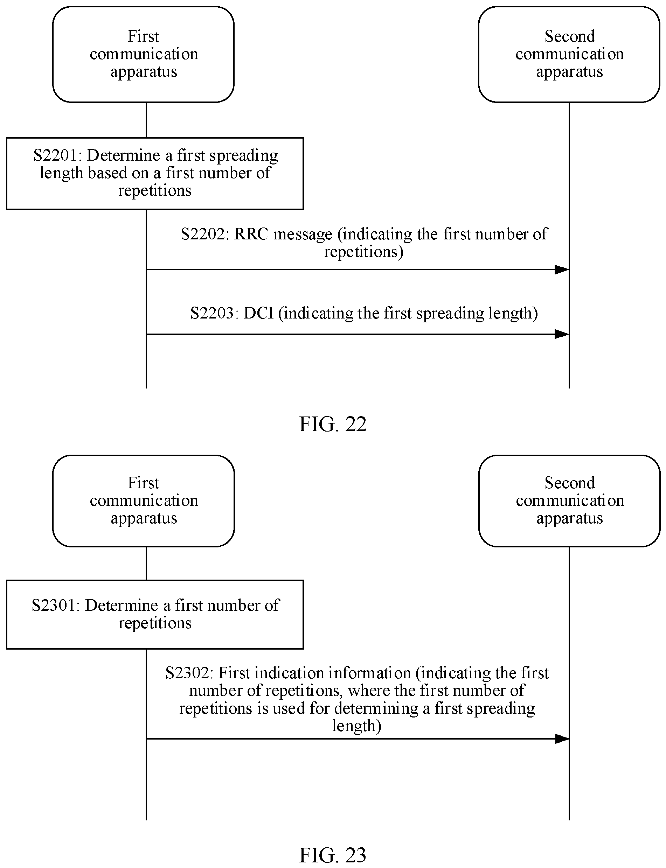

With reference to a diagram of a communication method shown in FIG. 22, the following describes the communication method in FIG. 17 by using an example in which first indication information is DCI and second indication information is an RRC message.

S2201: A first communication apparatus determines a first spreading length based on a first number of repetitions.

For content of the first number of repetitions, content of the first spreading length, and content of determining the first spreading length by the first communication apparatus, respectively refer to the content of the first number of repetitions, the content of the first spreading length, and the content of determining the first spreading length by the first communication apparatus that are described in FIG. 17. Repeated content is not listed herein again.

S2202: The first communication apparatus sends an RRC message to a second communication apparatus. Correspondingly, the second communication apparatus receives the RRC message from the first communication apparatus. The RRC message indicates the first number of repetitions.

For content of indicating the first number of repetitions by the RRC message, refer to the content of indicating the first number of repetitions by the second indication information described in FIG. 17. Repeated content is not listed herein again. Optionally, the RRC message may further indicate any one of the information C1 to C7 described in FIG. 17.

S2203: The first communication apparatus sends DCI to the second communication apparatus. Correspondingly, the second communication apparatus receives the DCI from the first communication apparatus. The DCI indicates the first spreading length.

Optionally, the DCI may further indicate an index of a first spreading sequence. For content of the first spreading sequence and a manner in which the DCI indicates the index of the first spreading sequence, respectively refer to the content of the first spreading sequence and the content of indicating the index of the first spreading sequence by the third indication information that are described in FIG. 17. Repeated content is not listed herein again.

In this way, the second communication apparatus may determine the first spreading length based on the DCI and the first number of repetitions. For content of determining the first spreading length based on the DCI and the first number of repetitions, refer to the content of determining the first spreading length by the second communication apparatus based on the DCI and the first number of repetitions described in FIG. 17. Repeated content is not listed herein again.

In a possible implementation, the first communication apparatus performs N_{SF}-fold spreading processing on a first signal to obtain a spread first signal, repeats the spread first signal Nᵣₑₚ times to obtain a second signal, and sends the second signal to the second communication apparatus (or another communication apparatus). Alternatively, the second communication apparatus may perform N_{SF}-fold spreading processing on a first signal to obtain a spread first signal, repeat the spread first signal Nᵣₑₚ times to obtain a second signal, and send the second signal to the first communication apparatus (or another communication apparatus). For content of performing spreading processing and repetition on the first signal, refer to the content described in FIG. 17.

In this embodiment of this application, the first spreading length may be determined based on the first number of repetitions. The first communication apparatus may indicate the first number of repetitions by using the RRC message, and may indicate the first spreading length by using both the first number of repetitions and the DCI, so that it is unnecessary to separately indicate the first spreading length. This reduces signaling overheads. In addition, the existing RRC message and DCI are reused for indication, and no dedicated signaling is required, so that a quantity of signaling interactions is reduced. In addition, the first number of repetitions is indicated by using the RRC message, and a spreading length corresponding to the first number of repetitions may be flexibly indicated by using the DCI. When the first spreading length is accurately indicated, flexibility of indicating the first spreading length can also be improved.

As described above, a repetition-based uplink coverage enhancement technology needs to allocate more resources to a signal. This reduces an overall capacity of a communication system.

In view of this, an embodiment of this application provides a communication solution. In this solution, a first communication apparatus determines a first spreading length based on a first number of repetitions, and the first communication apparatus sends first indication information to a second communication apparatus. The first indication information indicates the first number of repetitions, so that a manner of determining the first spreading length is provided. In this way, a signal sending apparatus (for example, the first communication apparatus or the second communication apparatus) may spread and repeatedly transmit a signal based on the first spreading length and the first number of repetitions. Spreading processing supports a plurality of users in reuse. Therefore, resources occupied by a single user are relatively reduced, and the overall capacity of the communication system is increased. In addition, the first spreading length is related to the first number of repetitions. In this way, the first spreading length may be determined by using the first number of repetitions, so that it is unnecessary to separately indicate the first spreading length and the first number of repetitions. This can also reduce signaling overheads.

FIG. 23 is a diagram of a communication method according to an embodiment of this application. The following describes steps shown in FIG. 23.

S2301: A first communication apparatus determines a first number of repetitions.

For content of the first number of repetitions and content of determining the first number of repetitions by the first communication apparatus, respectively refer to the content of the first number of repetitions and the content of determining the first number of repetitions by the first communication apparatus that are described in FIG. 17. Repeated content is not listed herein again.

S2302: The first communication apparatus sends first indication information to a second communication apparatus. Correspondingly, the second communication apparatus receives the first indication information from the first communication apparatus. The first indication information indicates the first number of repetitions. The first number of repetitions is used for determining a first spreading length. Alternatively, it may be stated as that the first number of repetitions is associated with the first spreading length or the first spreading length is associated with the first number of repetitions.

For content of indicating the first number of repetitions by the first indication information, refer to the content of indicating the first number of repetitions by the first indication information described in FIG. 17. Repeated content is not listed herein again. Optionally, the first indication information may further indicate at least one of the information C1 to C7 described in FIG. 17. For an implementation of the first indication information, refer to the implementation of the second indication information described in FIG. 17.

In a possible design, the first number of repetitions and the first spreading length satisfy a first association relationship, and the first number of repetitions is associated with only the first spreading length. For content of the first association relationship, refer to the content described in FIG. 17. In this case, the first indication information indicates the first number of repetitions. The second communication apparatus may obtain the first number of repetitions based on the first indication information. Further, the second communication apparatus may determine the first spreading length based on the first number of repetitions. In this design, the first communication apparatus may configure the first number of repetitions and the first spreading length for the second communication apparatus by using the first indication information. This helps reduce signaling overheads.

In another possible design, the first communication apparatus sends second indication information to the second communication apparatus. Correspondingly, the second communication apparatus receives the second indication information from the first communication apparatus. The second communication apparatus may determine the first spreading length based on the second indication information and the first number of repetitions. For content of determining the first spreading length, refer to the content of determining the first spreading length based on the first indication information and the first number of repetitions described in FIG. 17. Details are not listed herein again. For content and an implementation of the second indication information, respectively refer to the content and the implementation of the first indication information described in FIG. 17. For example, the first indication information is an RRC message, and the second indication information is DCI.

In a possible implementation, the first communication apparatus performs N_{SF}-fold spreading processing on a first signal to obtain a spread first signal, repeats the spread first signal Nᵣₑₚ times to obtain a second signal, and sends the second signal to the second communication apparatus (or another communication apparatus). Alternatively, the second communication apparatus may perform N_{SF}-fold spreading processing on a first signal to obtain a spread first signal, repeat the spread first signal Nᵣₑₚ times to obtain a second signal, and send the second signal to the first communication apparatus (or another communication apparatus). For content of performing spreading processing and repetition on the first signal, refer to the content described in FIG. 17.

Optionally, the first communication apparatus may further send third indication information to the second communication apparatus. Correspondingly, the second communication apparatus receives the third indication information from the first communication apparatus. The third indication information further indicates an index of a first spreading sequence. For content of the third indication information, content of the first spreading sequence, and content of indicating the first spreading sequence, respectively refer to the content of the third indication information, the content of the first spreading sequence, and the content of indicating the first spreading sequence that are described in FIG. 17. Repeated content is not listed herein again. Optionally, both the third indication information and the first indication information are carried in the DCI.

It may be understood that, to implement functions in the foregoing embodiments, a base station and a terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

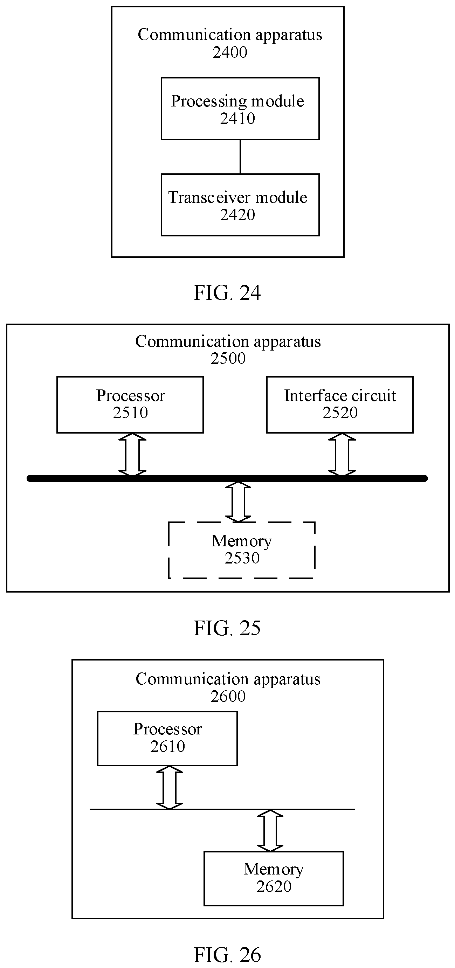

FIG. 24 is a diagram of a structure of a communication apparatus according to an embodiment of this application. The communication apparatus may be configured to implement functions of the first communication apparatus or the second communication apparatus in the foregoing method embodiments, and therefore can also achieve beneficial effects of the foregoing method embodiments. In this embodiment of this application, the communication apparatus may be any network device in FIG. 11, the satellite and/or the satellite ground station in FIG. 12, the satellite and/or the satellite ground station in FIG. 13, the network device in FIG. 15, the roadside device in FIG. 16, or any terminal device or the like in FIG. 11 to FIG. 16; or may be a software module, a hardware module (for example, a chip), or the like in these devices.

As shown in FIG. 24, the communication apparatus 2400 includes a processing module 2410 and a transceiver module 2420. The communication apparatus 2400 is configured to implement functions of the first communication apparatus in FIG. 17, FIG. 22, or FIG. 23, or implement functions of the second communication apparatus in FIG. 17, FIG. 22, or FIG. 23.

In a first embodiment, the communication apparatus 2400 may be configured to implement the functions of the first communication apparatus in FIG. 17 or FIG. 22.

For example, the processing module 2410 is configured to determine a first spreading length, and the transceiver module 2420 is configured to send first indication information.

For another example, the processing module 2410 is configured to determine a first spreading length, and the transceiver module 2420 is configured to send an RRC message and DCI.

In a second embodiment, the communication apparatus 2400 may be configured to implement the functions of the second communication apparatus in FIG. 17 or FIG. 22.

For example, the transceiver module 2420 is configured to receive first indication information under control of the processing module 2410.

For another example, the transceiver module 2420 is configured to receive an RRC message and DCI under control of the processing module 2410.

In a third embodiment, the communication apparatus 2400 may be configured to implement the functions of the first communication apparatus in FIG. 23.

For example, the processing module 2410 is configured to determine a first number of repetitions, and the transceiver module 2420 is configured to send first indication information.

In a fourth embodiment, the communication apparatus 2400 may be configured to implement the functions of the second communication apparatus in FIG. 23.

For example, the transceiver module 2420 is configured to receive first indication information and the like under control of the processing module 2410.

For more detailed descriptions of the processing module 2410 and the transceiver module 2420, directly refer to the related descriptions in the method embodiment shown in FIG. 17, FIG. 22, or FIG. 23. Details are not described herein again.

FIG. 25 is a diagram of a structure of a communication apparatus according to an embodiment of this application. The communication apparatus 2500 includes a processor 2510 and an interface circuit 2520. The processor 2510 and the interface circuit 2520 are coupled to each other. It may be understood that the interface circuit 2520 may be a transceiver or an input/output interface. Optionally, the communication apparatus 2500 may further include a memory 2530, configured to: store instructions executed by the processor 2510, store input data required by the processor 2510 to run instructions, or store data generated after the processor 2510 runs instructions.

When the communication apparatus 2500 is configured to implement the method shown in FIG. 17, FIG. 22, or FIG. 23, the processor 2510 is configured to implement functions of the processing module 2410, and the interface circuit 2520 is configured to implement functions of the transceiver module 2420.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor. The memory in embodiments of this application may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid state drive (solid state drive, SSD).

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. As shown in FIG. 26, the communication apparatus 2600 includes one processor 2610 and one memory 2620. The processor 2610 is coupled to the memory 2620. The memory 2620 stores instructions. When the instructions stored in the memory 2620 are executed by the processor 2610, the communication apparatus 2600 performs the method performed by the network device in the foregoing embodiments.

An embodiment of this application provides a communication system. The communication system includes a first communication apparatus and a second communication apparatus. For example, the first communication apparatus may implement functions of the first communication apparatus described in FIG. 17 or FIG. 22, and the second communication apparatus may implement functions of the second communication apparatus described in FIG. 17 or FIG. 22. Alternatively, the first communication apparatus may implement functions of the first communication apparatus described in FIG. 23, and the second communication apparatus may implement functions of the second communication apparatus described in FIG. 23.

An embodiment of this application provides a chip system. The chip system includes a processor and an interface. The processor is configured to: invoke instructions from the interface, and run the instructions. When the processor executes the instructions, the method in any one of FIG. 17, FIG. 22, or FIG. 23 is implemented.

An embodiment of this application provides a computer-readable storage medium. The computer-readable storage medium is configured to store a computer program or instructions. When the computer program or the instructions are run, the method in any one of FIG. 17, FIG. 22, or FIG. 23 is implemented.

An embodiment of this application provides a computer program product including instructions. When the computer program product runs on a computer, the method in any one of FIG. 17, FIG. 22, or FIG. 23 is implemented.

The method steps in embodiments of this application may be implemented in hardware, or may be implemented in software instructions executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in the base station or the terminal as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of the processes or the functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely for differentiation for ease of description, and are not intended to limit the scope of embodiments of this application. Sequence numbers of the foregoing processes do not mean execution sequences, and the execution sequences of the processes should be determined based on functions and internal logic of the processes.

## Claims

1. A communication method, comprising:
determining a first spreading length based on a first number of repetitions, wherein the first number of repetitions is a number of times of repeatedly transmitting a first signal, and the first spreading length is a length for performing spreading processing on the first signal; and
sending first indication information, wherein the first indication information indicates the first spreading length.

2. The method according to claim 1, wherein the method further comprises:
receiving a second signal, wherein the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and
processing the second signal based on the first number of repetitions and the first spreading length, to obtain the first signal.

3. The method according to claim 1, wherein the method further comprises:
performing N_{SF}-fold spreading processing on the first signal to obtain a spread first signal, wherein N_{SF} represents a value of the first spreading length; and
repeating the spread first signal Nᵣₑₚ times to obtain a second signal, wherein Nᵣₑₚ represents a value of the first number of repetitions; and sending the second signal.

4. The method according to claim 3, wherein the performing N_{SF}-fold spreading processing on the first signal to obtain the spread first signal comprises:
performing, by using the first spreading length, spreading processing on the first signal in K1 first-type time-domain units corresponding to a first frequency, to obtain a signal at the first frequency, wherein K1 is a positive integer; and/or
performing, by using the first spreading length, spreading processing on the first signal in K2 first-type time-domain units corresponding to a second frequency, to obtain a signal at the second frequency, wherein K2 is a positive integer, wherein
the spread first signal comprises the signal at the first frequency and/or the signal at the second frequency.

5. The method according to any one of claims 1 to 4, wherein
the first spreading length is in units of a first-type time-domain subunit and/or a first-type frequency-domain subunit; and/or
the first number of repetitions is in units of a second-type time-domain subunit and/or a second-type frequency-domain subunit.

6. The method according to any one of claims 1 to 5, wherein the method further comprises:
sending second indication information, wherein the second indication information indicates the first number of repetitions, and the first spreading length is associated with the first number of repetitions and the first indication information.

7. The method according to claim 6, wherein the determining the first spreading length based on the first number of repetitions comprises:
determining the first spreading length based on a ratio of the first number of repetitions to a first parameter value, wherein the first parameter value is determined based on a value of the first indication information.

8. The method according to claim 7, wherein
*a* = 2*^{k}*, wherein *a* represents the first parameter value, and k represents the value of the first indication information; or
*a* = k/M, wherein *a* represents the first parameter value, k represents the value of the first indication information, and M represents a quantity of first-type time-domain subunits that are in one first-type time-domain unit and that are used for transmitting the first signal.

9. The method according to any one of claims 1 to 8, wherein
each of at least one number of repetitions corresponds to at least one spreading length, and the at least one number of repetitions comprises the first number of repetitions.

10. The method according to claim 9, wherein
indicating, based on the first indication information, the first spreading length in at least one spreading length corresponding to the first number of repetitions.

11. The method according to claim 10, wherein
the first indication information comprises an index of the first spreading length, and the index of the first spreading length is used for determining the first spreading length from the at least one spreading length corresponding to the first number of repetitions.

12. The method according to any one of claims 1 to 11, wherein the first spreading length is one of the following: ${N}_{SF} = ceil \left(\frac{{N}_{rep}}{{2}^{k}}\right) ;$ ${N}_{SF} = floor \left(\frac{{N}_{rep}}{{2}^{k}}\right) ;$ or ${N}_{SF} = \frac{{N}_{rep} ∗ M}{k}$ wherein *N_{SF}* represents the first spreading length, *ceil* represents rounding up, *Nᵣₑₚ* represents the first number of repetitions, *floor* represents rounding down, *k* represents the value of the first indication information, and *M* represents a quantity of first-type time-domain subunits that are in one first-type time-domain unit and that are used for transmitting the first signal.

13. The method according to any one of claims 1 to 12, wherein the method further comprises:
sending third indication information, wherein the third indication information indicates an index of a first spreading sequence corresponding to the first spreading length.

14. The method according to claim 13, wherein
N bits in the third indication information indicate the index of the first spreading sequence, and a value of N is determined based on the first spreading length, wherein N is a positive integer.

15. The method according to claim 14, wherein the value of N is one of the following: $N = ceil \left({log}_{2}\left({N}_{SF}\right)\right) ;$ $N = floor \left({log}_{2}\left({N}_{SF}\right)\right) ;$ or $N = {log}_{2} \left({N}_{SF}\right)$ wherein *N_{SF}* represents the first spreading length, *ceil* represents rounding up, and *floor* represents rounding down.

16. The method according to any one of claims 13 to 15, wherein the third indication information comprises:
a number of the first spreading sequence, wherein the number of the first spreading sequence is used for determining the index of the first spreading sequence from an index set, and the index set comprises an index of a part or all of spreading sequences corresponding to the first spreading length; or
a sequence index value and/or a second parameter value, wherein the sequence index value and the second parameter value are used for determining the index of the first spreading sequence.

17. The method according to claim 16, wherein the index of the first spreading sequence is:
a sum of the sequence index value and the second parameter value;
a result of exactly dividing a sum of the sequence index value and the second parameter value by the first spreading length; or
a result of a product of the sequence index value and the first spreading length modulo the second parameter value.

18. The method according to any one of claims 1 to 17, wherein
the first spreading length is related to a first quantity, and the first quantity is a quantity of first-type time-domain subunits that are used for transmitting the first signal and that are in one first-type time-domain unit other than a first-type time-domain subunit used for transmitting a demodulation reference signal.

19. The method according to any one of claims 1 to 18, wherein
the first spreading length corresponds to a second spreading length, the first spreading length is used for performing spreading processing on a first part, carried in time domain, of the first signal, and the second spreading length is used for performing spreading processing on a second part, carried in time domain, of the first signal.

20. The method according to claim 19, wherein the second spreading length is:
a difference between a second quantity and the first spreading length; or
a smaller value between the first spreading length and a second quantity, wherein
the second quantity is a quantity of first-type time-domain subunits that are used for transmitting the first signal and that are in one first-type time-domain unit other than a first-type time-domain subunit used for transmitting a demodulation reference signal, or is a quantity of first-type time-domain subunits that are at the first frequency or the second frequency and that are used for transmitting the first signal, wherein both the first frequency and the second frequency are used for transmitting the first signal.

21. The method according to claim 19 or 20, wherein
the value of the first spreading length is a prime number.

22. The method according to any one of claims 1 to 21, wherein
the first number of repetitions is carried in the second indication information, and the second indication information further carries at least one of the following:
a first spreading type, wherein the first spreading type indicates to perform spreading processing on the first signal in frequency domain and/or time domain in a single slot, or the first spreading type indicates to perform spreading processing on the first signal in frequency domain and/or time domain in a plurality of slots;
a first transmission mode, wherein the first transmission mode indicates to transmit the first signal across first-type time-domain units, or transmit the first signal in a single first-type time-domain unit;
a third quantity, wherein the third quantity is a quantity of first-type time-domain subunits corresponding to each element in the first spreading sequence;
a fourth quantity, wherein the fourth quantity is a quantity of first-type frequency-domain subunits corresponding to each element in the first spreading sequence;
the index of the first spreading sequence corresponding to the first spreading length;
a comb size, wherein the comb size indicates a spacing for mapping the first signal in a frequency-domain direction; or
a comb offset value, wherein the comb offset value indicates an offset of a spacing for mapping the first signal in a frequency-domain direction.

23. The method according to any one of claims 1 to 22, wherein
the first indication information is carried in a radio resource control message, a system message, a radio resource control parameter, a random access response message, or downlink control information, and the radio resource control parameter indicates a common radio resource control parameter of a plurality of communication apparatuses.

24. A communication method, comprising:
receiving first indication information, wherein the first indication information indicates a first spreading length, the first spreading length is associated with a first number of repetitions, the first number of repetitions is a first number of repetitions of a first signal, and the first spreading length is a length for performing spreading processing on the first signal; and
determining the first spreading length.

25. The method according to claim 24, wherein the method further comprises:
receiving a second signal, wherein the second signal is a result of performing *N_{SF}*-fold spreading processing and *Nᵣₑₚ* repeated transmissions on the first signal in sequence, *N_{SF}* represents a value of the first spreading length, and *Nᵣₑₚ* represents a value of the first number of repetitions; and
processing the second signal based on the first number of repetitions and the first spreading length, to obtain the first signal.

26. The method according to claim 24, wherein the method further comprises:
performing N_{SF}-fold spreading processing on the first signal to obtain a spread first signal, wherein N_{SF} represents a value of the first spreading length; and
repeating the spread first signal Nᵣₑₚ times to obtain a second signal, wherein Nᵣₑₚ represents a value of the first number of repetitions; and sending the second signal.

27. A communication apparatus, comprising:
a module configured to perform the method according to any one of claims 1 to 23; and
a module configured to perform the method according to any one of claims 24 to 26.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 23 or the method according to any one of claims 24 to 26 by using a logic circuit or by executing code instructions.

29. A computer program product comprising instructions, wherein when the instructions are run by a communication apparatus, the communication apparatus is caused to perform the method according to any one of claims 1 to 23 or the method according to any one of claims 24 to 26.

30. A computer-readable storage medium, wherein the storage medium stores a computer program or instructions, and when the computer program or the instructions are executed by a communication apparatus, the method according to any one of claims 1 to 23 or the method according to any one of claims 24 to 26 is implemented.
